(19) Europäisches Patentamt
European Patent Office
Office européen des brevets

(11) EP 2 728 394 A1

(12) **EUROPEAN PATENT APPLICATION**
published in accordance with Art. 153(4) EPC

(43) Date of publication:
**07.05.2014 Bulletin 2014/19**

(21) Application number: **11869139.3**

(22) Date of filing: **01.07.2011**

(51) Int Cl.:
***G02B 27/01*** *(2006.01)*

(86) International application number:
**PCT/JP2011/065187**

(87) International publication number:
**WO 2013/005278 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Pioneer Corporation**
**Kawasaki-shi, Kanagawa 212-0031 (JP)**

(72) Inventor: **TANAHASHI, Yasuo**
**Kawasaki-shi**
**Kanagawa 212-0031 (JP)**

(74) Representative: **Haley, Stephen**
**Gill Jennings & Every LLP**
**The Broadgate Tower**
**20 Primrose Street**
**London EC2A 2ES (GB)**

(54) **DISPLAY DEVICE**

(57) The display device includes: an image forming element which forms an image to be displayed; and an optical element which reflects a light emitted by the image forming element to display a virtual image. A first angle of the image forming element with respect to a traveling direction of the light traveling from a center of the image forming element to a center of the optical element is set in accordance with a second angle of the optical element with respect to the traveling direction of the light such that distortion of the virtual image displayedby the optical element becomes small.

FIG. 1

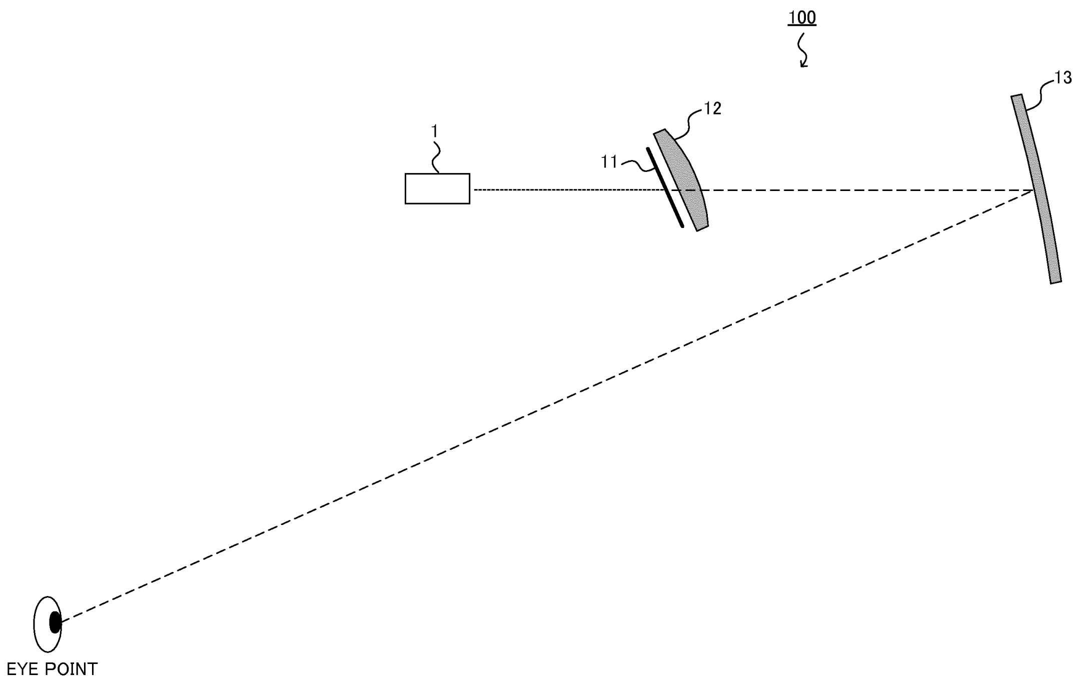


EP 2 728 394 A1

## Description

### TECHNICAL FIELD

The present invention relates to a display device which makes a user view an image as a virtual image.

### BACKGROUND TECHNIQUE

Conventionally, there is known a display device, such as a head-up display, which makes a user view an image as a virtual image from a position (eye point) of eyes of the user. For example, Patent Reference 1 proposes a technique of providing two concave mirrors for magnifying the image on a light path from an image displaying device to an observer to form a virtual image by reflecting the image of the image display device twice, thereby improving a magnification ratio of the virtual image and geometric distortion of the virtual image. Also, for example, Patent Reference 2 proposes a projection optical system including at least one rotation-asymmetrical correction optical surface for correcting image distortion, wherein a display surface of an image display element and a projection surface of the projection optical system are eccentric in a Y-Z sectional surface and the projection surface is formed by an arc-like curved surface whose bowstring is directed to the projection optical system side in the X-Z sectional surface.

Further, techniques relevant to the present invention are proposed in Patent References 3 to 5, for example.

### PRECEDING TECHNICAL DOCUMENTS

### PATENT REFERENCES

Patent Reference 1: Japanese Patent Application Laid-open under No. H08-29723
Patent Reference 2: Japanese Patent Application Laid-open under No. 2010-164944
Patent Reference 3: Japanese Patent published under No. 3912234
Patent Reference 4: Japanese Patent published under No. 3855461
Patent Reference 5: Japanese Patent Application Laid-open under No. H06-270716

### DISCLOSURE OF INVENTION

### PROBLEM TO BE SOLVED BY THE INVENTION

By the way, in a head-up display as described above, if a concave surface mirror having small radius of curvature is used in a tilted manner in order to obtain a large angle of view, for example, the image tends to be distorted. Also, the distortion of different shape tends to occur to the virtual images observed by the left and right eyes. This can make a user tired. The configuration of using two reflecting surfaces described in Patent Reference 1 can reduce the distortion of the virtual image, but this configuration makes the entire head-up display large and it is disadvantageous in view of attachment to a vehicle compartment. Using the optical element of aspheric surface or free-form surface as described in Patent Reference 2 can minimize the distortion of the virtual image, but it is known that such an optical element is difficult to manufacture with low cost.

The above is an example of a problem to be solved by the present invention. It is an object of the present invention to provide a display device capable of appropriately suppressing the distortion of the virtual image with simple configuration.

### MEANS FOR SOLVING THE PROBLEM

In one invention, a display device includes: an image forming element which forms an image to be displayed; and an optical element which reflects a light emitted by the image forming element to display a virtual image, wherein a first angle of the image forming element with respect to a traveling direction of the light traveling from a center of the image forming element to a center of the optical element is set in accordance with a second angle of the optical element with respect to the traveling direction of the light such that distortion of the virtual image displayed by the optical element becomes small.

In another invention, a display device includes: an image forming element which forms an image to be displayed; an optical element which reflects a light emitted by the image forming element to display a virtual image; a first angle changing means which changes an angle of the optical element with respect to a traveling direction of a light traveling from a center of the image forming element to a center of the optical element; and a second angle changing means which changes an angle of the image forming element with respect to the traveling direction of the light so as to reduce distortion of the virtual image caused by a change of an angle of the optical element with respect to the traveling direction of the light.

BRIEF DESCRIPTION OF THE DRAWINGS

FIG. 1 shows an entire configuration of a display device according to a first embodiment.
FIG. 2 shows a configuration of a laser projector.
FIGS. 3A and 3B are diagrams for explaining tilt angles of an EPE and a combiner.
FIG. 4 is a diagram for explaining an axis defining the tilt angles of the EPE and the combiner more specifically.
FIG. 5 shows an image formed on the EPE in a simulation.
FIG. 6 is a diagram for explaining a simulation condition at an eye box center.
FIGS. 7A to 7C show examples of the simulation result at the eye box center in the first embodiment.
FIG. 8 is a diagram for explaining a simulation condition with both eyes.
FIGS. 9A to 9C show examples of the simulation result with both eyes in the first embodiment.
FIGS. 10A to 10C are diagrams for explaining a reason why the first embodiment can suppress the distortion of the virtual image.
FIGS. 11A to 11C show a relation between the tilt angle of the EPE and the distortion amount of the virtual image, for different radius of curvature of the combiner.
FIGS. 12A and 12B show examples of the simulation result in a case where the tilt angle of the EPE is equal to the tilt angle of the combiner.
FIGS. 13A and 13B show specific examples of the arrangement of the laser projector and the EPE.
FIGS. 14A and 14B are diagrams for explaining a method of correcting the distortion of the image formed on the EPE.
FIG. 15 is a diagram showing an entire configuration of a display device according to a third embodiment.
FIGS. 16A to 16D show examples of the simulation result at the eye box center in the third embodiment.
FIGS. 17A to 17D show examples of the simulation result with both eyes in the third embodiment.
FIG. 18 is a diagram showing an entire configuration of a display device according to a first modified example.
FIG. 19 is a diagram showing an entire configuration of a display device according to a second modified example.
FIG. 20 is a diagram showing an entire configuration of a display device according to a third modified example.
FIGS. 21A and 21B show examples of the simulation result in a case where a field lens according to a fourth modified example is used.

FORMS TO EXERCISE THE INVENTION

According to one aspect of the present invention, there is provided a display device including: an image forming element which forms an image to be displayed; and an optical element which reflects a light emitted by the image forming element to display a virtual image, wherein a first angle of the image forming element with respect to a traveling direction of the light traveling from a center of the image forming element to a center of the optical element is set in accordance with a second angle of the optical element with respect to the traveling direction of the light such that distortion of the virtual image displayedby the optical element becomes small.

The above display device makes a user view an image as a virtual image. The image forming element forms an image to be displayed, and the optical element reflects a light emitted by the image forming element to display a virtual image. "A first angle" is defined as an angle of the image forming element with respect to the traveling direction of the light traveling from the center of the image forming element to the center of the optical element, and "a second angle" is defined as an angle of the optical element with respect to the traveling direction of the light traveling from the center of the image forming element to the center of the optical element. In this case, the first angle of the image forming element is set in accordance with the second angle of the optical element such that the distortion of the virtual image displayed by the optical element becomes small. Namely, the image forming element is arranged with a tilt of the first angle, in accordance with the second angle of the optical element, such that the distortion of the virtual image becomes small. By the above display device, the distortion of the virtual image can be appropriately suppressed.

One mode of the above display device further includes an angle changing means which changes an angle of the image forming element with respect to the traveling direction of the light so as to reduce the distortion of the virtual image caused by a change of the angle of the optical element with respect to the traveling direction of the light. Thus, when the tilt angle of the optical element is changed, by appropriately changing the tilt angle of the image forming element, the distortion of the virtual image caused by the change of the tilt angle of the optical element can be appropriately suppressed.

Preferably, the above display device further includes a means which changes the angle of the optical element.

Preferably in the above display device, the first angle is set to be larger than the second angle. By this, the distortion of the virtual image can be effectively suppressed.

More preferably in the above display device, the first angle is set to be substantially twice the second angle. By this, the distortion of the virtual image can be more effectively suppressed. Specifically, it is possible to appropriately suppress the trapezoidal distortion of the virtual image, the difference between the aspect ratios of the image formed on the image forming element and the virtual image, and the difference between the shapes of the virtual images observed by both eyes. In addition, by suppressing the difference between the shapes of the virtual images observed by both eyes, the distortion of the virtual image can be easily corrected by the image processing.

In a preferred example, the optical element has a concave shape against the traveling direction of the light emitted by the image forming element, and the image forming element has a plane shape.

Preferably in the above display device, the angle changing means can change the angle of the image forming element with respect to the traveling direction of the light so as to reduce trapezoidal distortion of the virtual image and/or a difference between aspect ratios of the images formed on the image forming element and the virtual image.

Preferably in the above display device, the angle changing means changes the angle of the image forming element with respect to the traveling direction of the light, while maintaining a relative angle relation between the image forming element and the optical element to be in a predetermined condition. More preferably, the angle changing means changes the angle of the image forming element with respect to the traveling direction of the light to be substantially twice the angle of the optical element with respect to the traveling direction of the light.

Another mode of the above display device further includes a virtual image distortion correcting element arranged between the image forming element and the optical element. In this case, preferably, the virtual image distortion correcting element corrects arch-shape distortion of the virtual image caused by a curvature of the optical element. By using the virtual image distortion correcting element, the arch-shape distortion of the virtual image can be appropriately corrected.

In another mode of the above display device, the image forming element is an exit-pupil expanding element which expands an exit-pupil of the light irradiated from a light source. For example, the exit-pupil expanding element is a microlens array in which plural microlenses are arranged.

Another mode of the above display device further includes a correcting means which corrects distortion of the image formed on the image forming element by the light irradiated from the light source. Preferably, the correcting means corrects the distortion of the image caused by an angle of the light irradiated from the light source with respect to the image forming element. By this, it is possible to appropriately correct the distortion of the image, caused by the light irradiated from the light source not vertically entering the image forming element.

In another mode of the above display device, as the image forming element, a liquid crystal display or an organic EL display can be used.

In a preferred example, the first angle is an angle that the image forming element forms with respect to an axis which is perpendicular to the traveling direction of the light traveling from the center of the image forming element to the center of the optical element and which passes through the center of the image forming element, and the second angle is an angle that the optical element forms with respect to an axis which is perpendicular to the traveling direction of the light traveling from the center of the image forming element to the center of the optical element and which passes through the center of the optical element.

According to another aspect of the present invention, there is provided a display device including: an image forming element which forms an image to be displayed; an optical element which reflects a light emitted by the image forming element to display a virtual image; a first angle changing means which changes an angle of the optical element with respect to a traveling direction of a light traveling from a center of the image forming element to a center of the optical element; and a second angle changing means which changes an angle of the image forming element with respect to the traveling direction of the light so as to reduce distortion of the virtual image caused by a change of an angle of the optical element with respect to the traveling direction of the light.

## EMBODIMENTS

Preferred embodiments of the present invention will be described below with reference to the attached drawings.

### [1st Embodiment]

First embodiment of the present invention will be described.

(Device Configuration)

FIG. 1 is a block diagram schematically showing an entire configuration of a display device 100 according to a first embodiment. Here, the outline of each constitutional element of the display device 100 will be described.

As shown in FIG. 1, the display device according to the first embodiment mainly includes a laser projector 1, an EPE (Exit-Pupil Expander) 11, a field lens 12 and a combiner 13. The display device 100 makes a user view an image from the position of the eye of the user (eye point) as a virtual image. The display device 100 is used as a head-up display, for example.

The laser projector 1 includes red, green and blue laser light sources, a scan mechanism for scanning the laser lights emitted by the laser light sources, and a control unit for controlling them. The light irradiated by the laser projector 1 enters the EPE 11. The detail of the laser projector 1 will be described later.

The EPE 11 magnifies the exit pupil of the light irradiated by the laser projector 1 and forms an intermediate image of the image to be presented to the user. For example, the EPE 11 is a microlens array in which plural microlenses are arranged. The light emitted by the EPE 11 enters the field lens 12. The EPE 11 corresponds to an example of "an image forming element" in the present invention. At the EPE 11, the image without distortion is formed as the intermediate image.

The field lens 12 is a lens arranged on the exit side of the EPE 11. The field lens 12 has a flat shape on the surface (i.e., the incident surface) to which the light from the EPE 11 enters, and has a spherical convex shape on the surface (i.e., the exit surface) opposite to the surface to which the light from the EPE 11 enters. The field lens 12 is arranged with a space from the EPE 11 such that the surface of the flat shape becomes parallel with the surface of the EPE 11. Also, the field lens 12 is arranged such that the axis connecting its center and the center of the EPE 11 becomes parallel with the axis extending in the vertical direction of the EPE 11. The light emitted by the field lens 12 enters the combiner 13. The field lens 12 corresponds to an example of "a virtual image distortion correcting element" in the present invention.

The combiner 13 is a half mirror which reflects the light from the field lens 12 thereby to display the image corresponding to the incident light as a magnified virtual image. Specifically, the combiner 13 has a surface (i.e., the incident surface), to which the light from the field lens 12 is incident, formed in a spherical concave surface shape. By the light reflected by the combiner 13, the user observes the virtual image from the eye point which is a predetermined apart from the combiner 13. The combiner 13 corresponds to one example of "an optical element" in the present invention.

For example, the EPE 11 and the field lens 12 are configured integrally with the laser projector 1. Namely, in the display device 100, the laser projector 1, the EPE 11 and the field lens 12 are not formed as separate parts, but the laser projector 1, the EPE 11 and the field lens 12 are formed as a single unit.

Next, with reference to FIG. 2, the configuration of the laser projector 1 will be described. As shown in FIG. 2, the laser projector 1 includes an image signal input unit 2, a video ASIC 3, a frame memory 4, a ROM 5, a RAM 6, a laser driver ASIC 7, a MEMS control unit 8, a laser light source unit 9 and a MEMS mirror 10.

The image signal input unit 2 receives an image signal inputted from outside and outputs it to the video ASIC 3. The video ASIC 3 is a block which controls the laser driver ASIC 7 and the MEMS control unit 8 based on the image signal inputted from the image signal input unit 2 and the scanning position information Sc inputted from the MEMS mirror 10. The video ASIC 3 is configured as an ASIC (Application Specific Integrated Circuit).

The video ASIC 3 includes a sync/image separating unit 31, a bit data converting unit 32, an emission pattern converting unit 33 and a timing controller 34. The sync/image separating unit 31 separates the image data to be displayed on the EPE 11 serving as an image displaying unit and the synchronization signal from the image signal inputted from the image signal input unit 2, and writes the image data into the frame memory 4. The bit data converting unit 32 reads out the image data written in the frame memory 4 and converts it to the bit data. The emission pattern converting unit 33 converts the bit data converted by the bit data converting unit 32 to the signal indicating the emission pattern of each of the lasers. The timing controller 34 controls the operation timings of the sync/image separating unit 31 and the bit data converting unit 32. The timing controller 34 also controls the operation timing of the MEMS control unit 8 described later.

Into the frame memory 4, the image data separated by the sync/image separating unit 31 is written. The ROM 5 stores control program and data necessary for the operation of the video ASIC 3. The RAM 6 serves as a work memory for the operation of the video ASIC, and various data is sequentially written into and read from the RAM 6.

The laser driver ASIC 7 is a block for generating signals to drive the laser diodes provided in the laser light source unit 9 described later, and is configured as an ASIC. The laser driver ASIC 7 includes a red laser driving circuit 71, a blue laser driving circuit 72 and a green laser driving circuit 73. The red laser driving circuit 71 drives the red laser LD1 based on the signal outputted by the emission pattern converting unit 33. The blue laser driving circuit 72 drives the blue laser LD2 based on the signal outputted by the emission pattern converting unit 33. The green laser driving circuit 73 drives the green laser LD3 based on the signal outputted by the emission pattern converting unit 33.

The MEMS control unit 8 controls the MEMS mirror 10 based on the signal outputted by the timing controller 34. The MEMS control unit 8 includes a servo circuit 81 and a driver circuit 82. The servo circuit 81 controls the operation of the MEMS mirror 10 based on the signal from the timing controller 34. The driver circuit 82 amplifies the control signal of the MEMS mirror 10 outputted by the servo circuit 81 to a predetermined level and outputs it.

The laser light source unit 9 emits the laser light to the MEMS mirror 10 based on the driving signal outputted by the laser driver ASIC 7. The MEMS mirror 10 serving as a scanning means reflects the laser light emitted by the laser light source unit 9 to the EPE 11. By this, the MEMS mirror 10 forms the image to be displayed on the EPE 11. Also, the MEMS mirror 10 moves to scan the EPE 11 under the control of the MEMS control unit 8 so as to display the image inputted to the image signal input unit 2, and outputs the scanning position information (e.g., information such as the angle of the mirror) to the video ASIC 3.

Next, the detailed configuration of the laser light source unit 9 will be described. The laser light source unit 9 includes a casing 91, a wavelength selective element 92, a collimator lens 93, a red laser LD1, a blue laser LD2, a green laser LD3 and a monitoring-purpose light receiving element (hereinafter simply referred to as "light receiving element") 50. In the following description, the red laser LD1, the blue lase LD2 and the green laser LD3 are simply expressed as "the laser LD" when they are not distinguished from each other.

The casing 91 is formed of resin into a substantially box shape. The casing 91 is formed with a CAN attaching part 91a and a collimator attaching part 91b. In order to attach the green laser LD3, the CAN attaching part 91a has a concave sectional shape and formed with a hole communicating with the inside of the casing 91. The collimator attaching part 91b is provided on a surface perpendicular to the CAN attaching part 91a, has a concave sectional shape, and is formed with a hole communicating with the inside of the casing 91.

The wavelength selective element 92 serving as a synthesizingelementisconfiguredbyatrichroicprism, forexample, and is formedwith a reflecting surfaces 92a and 92b. The reflecting surface 92a transmits the laser light emitted by the red laser LD1 to the collimator lens 93, and reflects the laser light emitted by the blue laser LD2 to the collimator lens 93. The reflecting surface 92b transmits a major part of the laser light emitted by the red laser LD1 and the blue laser LD2 to the collimator lens 93, and reflects a part of those laser lights to the light receiving element 50. In addition, the reflecting surface 92b reflects a major part of the laser light emitted by the green laser LD3 to the collimator lens 93, and transmits a part of the same laser light to the light receiving element 50. Thus, the lights emitted by those lasers are overlapped and incident upon the collimator lens 93 and the light receiving element 50. The wavelength selective element 92 is provided adjacent to the collimator attaching part 91b in the casing 91. The collimator lens 93 outputs the laser light incident from the wavelength selective element 92 to the MEMS mirror 10 as a parallel light. The collimator lens 93 is fixed to the collimator attaching part 91b of the casing 91 by UV adhesive. Namely, the collimator lens 93 is provided behind the synthesizing element.

The red laser LD1 serving as a laser light source emits the red laser light. The red laser LD1 is fixed at a position on the same axis as the wavelength selective element 92 in the casing 91 and the collimator lens 93, in such a manner that the semiconductor laser light source is in the chip state or the chip is disposed on a sub-mount. The blue laser LD2 serving as a laser light source emits the blue laser light. The blue laser LD2 is fixed at a position that enables the emitted laser light to be reflected by the reflecting surface 92a to the collimator lens 93, in such a manner that the semiconductor laser light source is in the chip state or the chip is disposed on a sub-mount. The positions of the red laser LD1 and the blue laser LD2 maybe exchanged. The green laser LD3 serving as a laser light source is in a state being attached to the CAN package or the frame package, and emits the green laser light. A semiconductor laser light source chip B emitting the green laser light is attached in the CAN package of the green laser LD3, and the green laser LD3 is fixed at the CAN attaching part 91a of the casing 91. The light receiving element 50 receives a part of the laser light emitted by each of the laser light sources. The light receiving element 50 is a photoelectric converting element such as a photodetector, and supplies a detection signal Sd, which is an electric signal in accordance with the light quantity of the incident laser light, to the laser driver ASIC 7.

(Tilt Angles of EPE and Combiner)

Next, with reference to FIGS. 3A and 3B, the tilt angle $\beta$ of the EPE 11 and the tilt angle $\alpha$ of the combiner 13 will be described. The tilt angle corresponds to "the first angle" of the present invention, and the tilt angle $\alpha$ corresponds to "the second angle" of the present invention.

As shown in FIG. 3A, an axis AXa is defined which corresponds to a line connecting the center C1 of the EPE 11 and the center C2 of the combiner 13. Then, a tilt angle $\beta$ of the EPE 11 is defined as a tilt angle of the EPE 11 with respect to an axis AXb, wherein the axis AXb is orthogonal to the axis AXa as well as an axis AXd perpendicularly crossing the AXa and passes through the center C1 of the EPE 11 (see. FIG. 3B). Similarly, a tilt angle $\alpha$ is defined as a tilt angle of the combiner 13 with respect to an axis AXc, wherein the axis AXc is orthogonal to the axis AXa as well as an axis AXe which crosses the axis AXa and is parallel with the axis AXd, and wherein the axis AXc passes through the center C2 of the combiner 13 (see. FIG. 3B). The tilt angles $\alpha$ and $\beta$ are defined such that the counterclockwise direction with respect to each axis AXc and AXb is "positive". Since the field lens 12 is arranged such that its flat shape surface is parallel with the surface of the EPE 11, the field lens 12 is also tilted with respect to the axis perpendicular to the axis AXa by a tilt angle β.

Next, with reference to FIG. 4, the axis AXa described above will be supplementarily described. As shown in FIG. 4, in an optical system without the field lens 12, "the center C1" of the EPE 11 is defined as a center of the image formed on the EPE 11, and "the center C2" of the combiner 13 is defined as an intersection of the visual line direction looking the center C3 of the virtual image from the eye point with the reflecting surface of the combiner 13. The axis AXa is defined as a line connecting the center C1 and the center C2. Even when the field lens 12 is used, there is no change that the definition of the axis AXa is the line connecting the center C1 and the center C2.

In this embodiment, in view of suppressing the distortion of the virtual image displayed by the combiner 13 (e.g., in view of suppressing the difference between the shapes of the virtual images observed by each of the left and right eyes), the tilt angle β of the EPE 11 is set based on the tilt angle α of the combiner 13. Specifically, the tilt angle β of the EPE 11 is set to substantially twice the tilt angle α of the combiner 13 (β≒2α). In other words, the EPE 11 is set with a tilt angle with respect to the axis AXb, which is substantially twice the tilt angle of the combiner 13 with respect to the axis AXc.

(Simulation Result)

Next, the description will be given of the simulation result in the case where the tilt angle β of the EPE 11 is set to substantially twice the tilt angle α of the combiner 13.

This example is obtained by the simulation performed using the following parameters. As to "Y1" and "Y2", reference should be made to FIG. 3A.

- Tilt angle α of the combiner 13: 12 degrees
- Interval between the EPE 11 and the flat surface of the field lens 12: 2mm
- Interval Y1 between the center C1 of the EPE 11 and the center C2 of the combiner 13: 170mm
- Interval Y2 between the center C2 of the combiner 13 and the eye point: 500mm
- Size of the intermediate image formed on the EPE 11:

  Horizontal length 75mm × Vertical length 25mm

  (The shape of the intermediate image is the lattice image as shown in FIG. 5, in which squares with no distortion are aligned)
- Radius of curvature of the concave surface of the combiner 13: 400mm
- Radius of curvature of the convex surface of the field lens 12: 150mm
- Center thickness of the field lens 12: 8mm
- Refractive index of the field lens 12: 1.526

First, with reference to FIGS. 6, 7A to 7C, the simulation result at the eye box center will be described. Here, the description will be given of the case where the virtual image is formed at the position "Y3=1500mm" ahead of the eye box center as shown in FIG. 6. Here, the eye box center indicates an ideal observing point which locates substantially at the center of both eyes and from which the virtual image can be observed substantially right in front.

FIGS. 7A to 7C show examples of the simulation result at the eye box center. In FIGS. 7A to 7C, the virtual image obtained by the simulation is shown by the solid lines, and the shape of the reference screen for comparing the virtual image size and the shape is shown by the dashed line. Here, the size of the reference screen is "Horizontal length 450 (mm) × Vertical length 150 (mm)".

FIG. 7A shows an example of the simulation result in a case where the tilt angle β of the EPE 11 is set to "0 degree", i.e., the tilt angle β of the EPE 11 is not set to substantially twice the tilt angle α (=12 degrees) of the combiner 13. Also, FIG. 7A shows the example of the simulation result in a case where the field lens 12 is not arranged between the EPE 11 and the combiner 13. From FIG. 7A, it is understood that the virtual image has the distortion. Specifically, it is understood that trapezoidal distortion of the virtual image and arch-shape distortion of the virtual image occur.

FIG. 7B shows an example of the simulation result in a case where the tilt angle β of the EPE 11 is set to "24 degrees", i.e., the tilt angle β of the EPE 11 is set to substantially twice the tilt angle α (=12 degrees) of the combiner 13. Also, FIG. 7B shows the example of the simulation result in a case where the field lens 12 is not arranged between the EPE 11 and the combiner 13. From FIG. 7B, it is understood in comparison with FIG. 7A that the trapezoidal distortion of the virtual image is appropriately eliminated.

FIG. 7C shows an example of the simulation result in a case where the tilt angle β of the EPE 11 is set to "24 degrees", i.e., the tilt angle β of the EPE 11 is set to substantially twice the tilt angle α (=12 degrees) of the combiner 13. Also, FIG. 7B shows the example of the simulation result in a case where the field lens 12 is arranged between the EPE 11 and the combiner 13. From FIG. 7C, it is understood in comparison with FIG. 7B that the arch-shape distortion of the virtual image is appropriately eliminated.

Next, with reference to FIGS. 8, 9A to 9C, the description will be given of the simulation result with both eyes. Here, as shown in FIG. 8, the interval W between both eyes is "70mm", and the virtual image is formed at the position "Y4=1500mm" ahead of the center position of the left eye and the right eye.

FIGS. 9 to 9C show examples of the simulation result with both eyes. In FIGS. 9A to 9C, the virtual image obtained by the simulation is shown by the solid lines and the broken line, and the shape of the reference screen is shown by the dashed line. Specifically, the virtual image observed by the left eye is shown by the solid line, and the virtual image observed by the right eye is shown by the broken line.

FIG. 9A shows an example of the simulation result in a case where the tilt angle β of the EPE 11 is set to "0 degree", i.e., the tilt angle β of the EPE 11 is not set to substantially twice the tilt angle α (=12 degrees) of the combiner 13. Also, FIG. 9A shows the example of the simulation result in a case where the field lens 12 is not arranged between the EPE 11 and the combiner 13. From FIG. 9A, it is understood that the distortion of the virtual image such as trapezoidal distortion and arch-shape distortion occur. In addition, it is understood that the shape of the distortion of the virtual image observed by the left eye is different from the shape of the distortion of the virtual image observed by the right eye.

FIG. 9B shows an example of the simulation result in a case where the tilt angle β of the EPE 11 is set to "24 degrees", i.e., the tilt angle β of the EPE 11 is set to substantially twice the tilt angle α (=12 degrees) of the combiner 13. Also, FIG. 9B shows the example of the simulation result in a case where the field lens 12 is not arranged between the EPE 11 and the combiner 13. From FIG. 9B, it is understood in comparison with FIG. 9A that the trapezoidal distortion of the virtual image is appropriately eliminated. In addition, the difference of the shapes of the virtual images observed by the left and right eyes is appropriately eliminated.

FIG. 9C shows an example of the simulation result in a case where the tilt angle β of the EPE 11 is set to "24 degrees", i.e., the tilt angle β of the EPE 11 is set to substantially twice the tilt angle α (=12 degrees) of the combiner 13. Also, FIG. 9B shows the example of the simulation result in a case where the field lens 12 is arranged between the EPE 11 and the combiner 13. From FIG. 9C, it is understood in comparison with FIG. 9B that the arch-shape distortion of the virtual image is appropriately eliminated. In addition, it is understood that the state, in which the difference of the shapes of the virtual images observed by both eyes as shown in FIG. 9B is suppressed, is appropriately maintained.

From above, according to the first embodiment, the distortion of the virtual image can be appropriately suppressed by setting the tilt angle β of the EPE 11 to substantially twice the tilt angle α of the combiner 13. Specifically, the trapezoidal distortion of the virtual image and the difference of the shapes of the virtual images observed by both eyes can be appropriately suppressed. Further, by inserting the field lens 12 on the exit side of the EPE 11, the arch-shape distortion of the virtual image can be appropriately suppressed.

Here, with reference to FIGS. 10A to 10C, the study will be given of the reason why the distortion of the virtual image can be suppressed by setting the tilt angle β of the EPE 11 to substantially twice the tilt angle α of the combiner 13.

FIG. 10A shows a side view of the EPE 11 and the combiner 13. FIG. 10B shows a top view of the EPE 11 and the combiner 13 observed in a direction shown by the arrow A1 in FIG. 10A. FIGS. 10A and 10B show the state in which the tilt angle β of the EPE 11 is set to "0 degree", i.e., the tilt angle β of the EPE 11 is not set to substantially twice the tilt angle α (=12 degrees) of the combiner 13. In this case, as shown in FIG. 10B, the light 1 emitted from the upper part of the EPE 11 reaches the surface of the combiner 13 at the position shown by the reference numeral 13a, and the light 2 emitted from the lower part of the EPE 11 reaches the surface of the combiner 13 at the position shown by the reference numeral 13b. From this, it is understood that the distance that the light 2 travels to reach the surface of the combiner 13 is longer than the distance that the light 1 travels to reach the surface of the combiner 13. By this difference of the distances, it is presumed that the light height of the light in the horizontal direction incident upon the surface of the combiner 13 becomes large and the distortion of the virtual image expanding in the lower direction occurs.

FIG. 10C shows a side view of the EPE 11 and the combiner 13 in a case where the tilt angle β of the EPE 11 is set to substantially twice the tilt angle α of the combiner 13. In this case, the distance that the light 1 emitted from the upper part of the EPE 11 travels to reach the surface of the combiner 13 is generally equal to the distance that the light 2 emitted from the lower part of the EPE 11 travels to reach the surface of the combiner 13. Therefore, it is presumed that the distortion of the virtual image described above can be reduced.

It is not limited that the tilt angle β of the EPE 11 is set to substantially twice the tilt angle α of the combiner 13. As described above, if the lights emitted from various parts of the EPE 11 travel generally equal distance to reach the surface of the combiner 13, the distortion of the virtual image can be reduced. Therefore, in one example, the tilt angle β of the EPE 11 can be set in accordance with the tilt angle α of the combiner 13 such that the lights emitted from the various parts of the EPE 11 travels generally equal distance to reach the surface of the combiner 13. For example, the tilt angle β of the EPE 11 can be set to an angle at least larger than the tilt angle α of the combiner 13. From the simulation result described above, it is preferred that the tilt angle β of the EPE 11 is set to substantially twice the tilt angle α of the combiner 13. However, it is permitted that the tilt angle β of the EPE 11 is not strictly set to twice the tilt angle α of the combiner 13, and the tilt angle β of the EPE 11 may be set to an angle around twice of the tilt angle α of the combiner 13. This is because, as long as the tilt angle β of the EPE 11 is close to twice the tilt angle α of the combiner 13, it is presumed that the lights emitted from various parts of the EPE 11 travel generally equal distance to reach the surface of the combiner 13.

The above description shows the result in the case where the radius of curvature of the combiner 13 is 400mm. In the following, it will be described that the optimum tilt angle β of the EPE 11 does not depend on the radius of curvature of the combiner 13.

Here, the result in the case where the radius of curvature of the combiner 13 is 400mm is compared with the result in the case where the radius of curvature of the combiner 13 is 500mm. The simulation was performed with the following parameters. The case where the radius of curvature of the combiner 13 is 400mm is suitably expressed as "R400", and the case where the radius of curvature of the combiner 13 is 500mm is suitably expressed as "R500".

- Intermediate image size on the EPE 11:

Horizontal length 75mm × Vertical length 25mm

- Distance from the eyes to the virtual image: 1500mm
- Tilt angle α of the combiner 13: 12 degrees
- Radius of curvature of R400 combiner 13: 400mm
- Interval between R400 combiner 13 and EPE 11: 170mm
- Reference screen size used for R400 combiner 13:

Horizontal length 450mm × Vertical length 150mm

- Radius of curvature of R500 combiner 13: 500mm
- Interval between R500 combiner 13 and EPE 11: 200mm
- Reference screen size used for R500 combiner 13:

Horizontal length 360mm × Vertical length 120mm

FIGS. 11A to 11C show examples of the simulation result of R400 and R500. Here, the results in the case where the field lens 12 is not used are shown. FIG. 11A shows the distortion amounts of the virtual image of R400 and R500 in the case where the tilt angle of the EPE 11 is set to various values. The "distortion amount of the virtual image" is defined as an absolute value of the angle of the vertical line at the edge of the virtual image as shown by the solid arrow X2 in FIGS. 11B and 11C with respect to the vertical line of the frame as shown by the dashed line X1 in FIGS. 11B and 11C. FIG. 11B shows the distortion of the virtual image observed at the eye box center when the tilt angle β is set to 0 degree in case of using R400, and FIG. 11C shows the distortion of the virtual image observed at the eye box center when the tilt angle β is set to 32 degrees in case of using R400.

From FIG. 11A, it is understood that the tilt angle β of the EPE 11, with which the distortion amount of the virtual image becomes smallest, is 24 degrees (twice the tilt angle α of the combiner 13) regardless of the radius of curvature of the combiner 13 being 400mm or 500mm. Namely, regardless of the the radius of curvature of the combiner 13 being 400mm or 500mm, the optimum set value for the tilt angle β of the EPE 11 does not change.

From FIG. 11A, it is understood that the distortion amount of the virtual image becomes smallest when the tilt angle β of the EPE 11 is 24 degrees (β=2α), but the distortion amount of the virtual image is small when the tilt angle β is close to 24 degrees. It is proved from this result that, if the tilt angle β is not set to twice the tilt angle α of the combiner 13, if the tilt angle β is set to the angle close to twice the tilt angle α of the combiner 13, the effect of the present invention, i.e., the reduction of the distortion of the virtual image can be obtained.

On the other hand, from FIG. 11A, it is understood that the trapezoidal distortion of the virtual image expanding in the lower direction occurs if the tilt angle β of the EPE 11 is smaller than 24 degrees, and the trapezoidal distortion of the virtual image expanding in the upper direction occurs if the tilt angle β of the EPE 11 is larger than 24 degrees. In addition, from FIGS. 11B and 11C, it is understood that the aspect ratio largely deviates from its ideal state if the tilt angle β is the value largely different from 24 degrees.

FIGS. 12A and 12B are diagrams for explaining that the distortion of the virtual image is reduced when the tilt angle β of the EPE 11 is set to the same level as the tilt angle α of the combiner. FIG. 12A shows an example of the simulation result of R400, and FIG. 12B shows an example of the simulation result of R500. Specifically, FIG. 12A shows the distortion of the virtual image observed at the eye box center when the tilt angle β of the EPE 11 is set to 12 degrees in case of using R400, and FIG. 12B shows the distortion of the virtual image observed at the eye box center when the tilt angle β of the EPE 11 is set to 12 degrees in case of using R500. It is noted that the simulation parameters are the same as those used in the simulation shown in FIGS. 11A to 11C.

From FIGS. 12A and 12B, it is understood that the distortion of the virtual image is reduced to some extent when the tilt angle β of the EPE 11 is set to the same level as the tilt angle α of the combiner. It is presumed that the distortion of the virtual image is further reduced if the tilt angle β of the EPE 11 is further increased from this state.

[2nd Embodiment]

Next, the second embodiment of the present invention will be described. The second embodiment is different from the first embodiment in that the distortion of the image formed on the EPE 11 is corrected by the light emitted by the laser projector 1. Specifically, the second embodiment corrects the distortion of the image formed on the EPE 11, which possibly occurs because the light emitted by the laser projector 1 does not perpendicularly enter the EPE 11 in such an arrangement that the light emitted by the laser projector 1 does not perpendicularly enter the EPE 11.

In the following, the description of the same configuration as the first embodiment will be properly omitted. Also, the configuration not described here is assumed to be the same as the first embodiment. For example, the configuration that the the tilt angle β of the EPE 11 is set to substantially twice the tilt angle α of the combiner 13 is also applied to the second embodiment.

FIGS. 13A and 13B show the specific example of the arrangement of the laser projector 1 and the EPE 11. FIG. 13A shows the arrangement in which the light from the laser projector 1 perpendicularly enters the EPE 11. In this arrangement, the light for drawing the center of the image is projected perpendicularly to the EPE 11 from the laser projector 1. FIG. 13B shows the arrangement in which the light from the laser projector 1 does not perpendicularly enter the EPE 11. In this arrangement, the light for drawing the center of the image is projected obliquely to the EPE 11 from the laser projector 1 with a certain incident angle (≠0 degree).

When the arrangement shown in FIG. 13B is applied, there is a possibility that the trapezoidal distortion occurs in the image formed on the EPE 11 (meaning a real image, the same apply in the following description.). The second embodiment performs processing to correct such trapezoidal distortion. When the arrangement shown in FIG. 13A is applied, basically the trapezoidal distortion does not occur in the image formed on the EPE 11. However, in the arrangement of FIG. 13A, it is difficult to ensure the head clearance if the display device 100 is set at the upper part of the vehicle compartment. Therefore, the arrangement of FIG. 13B is more advantageous than the arrangement of FIG. 13A in view of ensuring the head clearance when the display device 100 is set at the upper part of the vehicle compartment.

FIGS. 14A and 14B are diagrams for explaining the method of correcting the trapezoidal distortion of the image formed on the EPE 11. FIG. 14A shows a specific example of the trapezoidal distortion of the image formed on the EPE 11, which possibly occurs when the arrangement shown in FIG. 13B is applied. The second embodiment performs the processing of drawing the image for cancelling the trapezoidal distortion on the EPE 11 by the laser projector 1. Specifically, by drawing such an image that the length gradually changes from the upper side to the lower side as shown in FIG. 14B with compressing the vertical width of the inputted image, the lattice image without distortion as shown in FIG. 5 is formed on the EPE 11.

Inoneexample, the laser driver ASIC7 (see. FIG. 2) performs the control of changing the light emitting period of the laser LDs in the laser light source unit 9 (i.e., the control of changing the light emitting timing of the laser LD), and thereby the laser projector 1 draws the image as shown in FIG. 14B such that the number of the pixels do not change at any horizontal line of the image formed on the EPE 11. In this example, the laser driver ASIC 7 controls the light emitting period of the laser LD to be gradually short from the upper part to the lower part of the image formed on the EPE 11 (i.e., controls the light emitting period of the laser LD to be gradually long from the lower part to the upper part of the image formed on the EPE 11). At the same time, the MEMS control unit 8 controls the MEMS mirror 10 to narrow the interval of the drawn horizontal lines with respect to the inputted image, i.e., increase the linear density. In another example, the video ASIC 3 in the laser projector 1 (see. FIG. 2) performs the image processing of the image inputted from the image signal input unit 2, thereby to draw the image as shown in FIG. 14B on the EPE 11. In this example, the video ASIC 3 performs the image processing to deform the original image inputtedby the image signal input unit 2 to the image as shown in FIG. 14B. Thus, the laser driver ASIC 7 and the video ASIC 3 in the laser projector 1 correspond to an example of the "correcting unit" in the present invention.

According to the second embodiment described above, it is possible to appropriately correct the distortion of the image formed on the EPE 11, causedby the light emittedby the lase projector 1 that does not perpendicularly enter the EPE 11. Therefore, when the display device 100 is set in the vehicle compartment, it is possible to adopt the appropriate arrangement of ensuring the head clearance, with suppressing the occurrence of the disadvantage such as the distortion of the image formed on the EPE 11.

[3rd Embodiment]

Next, the third embodiment of the present invention will be described. The third embodiment is different from the first and second embodiments described above in that, when the tilt angle α of the combiner 13 is changed, the tilt angle β of the EPE 11 is automatically changed in accordance with the changed tilt angle α. Specifically, in the third embodiment, the control of changing the tilt angle β of the EPE 11 is performed with maintaining the relative relation of the angle between the EPE 11 and the combiner 13 to be in a predetermined condition. Specifically, the control is performed to change the title angle β of the EPE 11 in accordance with the change of the tilt angle α of the combiner such that the condition "β≒2α" is satisfied.

When the display device is set and used in the vehicle compartment, the eye point of the driver, who is a user, changes in accordance with his sitting height, and therefore the driver tends to adjust the tilt angle α of the combiner 13. In this view, in the third embodiment, assuming that the driver changes the tilt angle α of the combiner 13, when the tilt angle α is changed, the tilt angle β of the EPE 11 is automatically changed accordingly.

FIG. 15 is a block diagram schematically showing an entire configuration of the display device 101 according to the third embodiment. The same constitutional elements as those in the display device 100 of the first embodiment (see. FIG. 1 and 3A) are shown by the same reference numerals, and the description thereof will be omitted.

The display device 101 according to the third embodiment is different from the display device 100 according to the first embodiment in that it includes the laser projector 1a instead of the laser projector 1 and it further includes an angle sensor 15 and an actuator 16. The angle sensor 15 detects the tilt angle α of the combiner 13. The actuator 16 performs the control of changing the tilt angle β of the EPE 11. The laser projector 1a has the same configuration as the laser projector 1, and has a control unit 1aa for controlling the actuator 16.

The control unit 1aa in the laser projector 1a obtains the detection signal S15 corresponding to the tilt angle α detected by the angle sensor 15, and supplies the control signal S16 for changing the tilt angle β of the EPE 11 to the actuator 16 based on the detection signal S15. Specifically, the control unit 1aa performs the control of setting the tilt angle β of the EPE 11 to substantially twice the tilt angle α of the combiner 13. Namely, when the tilt angle α of the combiner 13 is changed, the control unit 1aa performs the control of changing the tilt angle β to be substantially twice the changed tilt angle α. The control unit 1aa and the actuator 16 correspond to "the angle changing unit" of the present invention.

Next, with reference to FIGS. 16A to 16D and 17A to 17D, the description will be given of the simulation result in the case where the tilt angle β of the EPE 11 is changed in accordance with the tilt angle α of the combiner 13 as described above. It is noted that the simulation is performed by using the same parameters as FIGS. 7A to 7C and 9A to 9C of the first embodiment, except for the tilt angle α of the combiner. In FIGS. 16A to 16D and 17A to 17D, the tilt angle α of the combiner 13 is set to "12 degrees" in an initial state, like the first embodiment, and the case where the tilt angle α is changed from this state to "16 degrees" will be described. It is assumed that the tilt angle β of the EPE 11 is set to "24 degrees" in an initial state, like the first embodiment. (Namely, the initial state is set to "β≒2α".) It is assumed that other parameters are the same as the first embodiment.

FIGS. 16A to 16D show examples of the simulation result at the eye box center. In FIGS. 16A to 16D, the virtual image obtained by the simulation is shown by the solid line, and the shape of the reference screen is shown by the frame of dashed line.

FIG. 16A shows the simulation result in the case where the tilt angle β of the EPE 11 is not changed to substantially twice the changed tilt angle α (=16 degrees) of the combiner 13, i.e., in the case where the tilt angle β of the EPE 11 is maintained to be "24 degrees". Also, FIG. 16A shows the example of the simulation result in the case where the field lens 12 is not set between the EPE 11 and the combiner 13. From FIG. 16A, it is understood that distortion of the virtual image occurs. Specifically, in comparison with the result at the initial state before changing the tilt angle α of the combiner 13 as shown in FIG. 7B, it is understood that new distortion of the virtual image occurs.

FIG. 16B shows the simulation result in the case where the tilt angle β of the EPE 11 is not changed to substantially twice the changed tilt angle α (=16 degrees) of the combiner 13, i.e., in the case where the tilt angle β of the EPE 11 is maintained to be "24 degrees". Also, FIG. 16B shows the example of the simulation result in the case where the field lens 12 is set between the EPE 11 and the combiner 13. From FIG. 16B, in comparison with FIG. 16A, it is understood that the arch-shape distortion of the virtual image is suppressed. However, in comparison with the result at the initial state before changing the tilt angle α of the combiner 13 as shown in FIG. 7C, it is understood that new distortion of the virtual image occurs.

FIG. 16C shows the simulation result in the case where the tilt angle β of the EPE 11 is changed to substantially twice the changed tilt angle α (=16 degrees) of the combiner 13, i.e., in the case where the tilt angle β of the EPE 11 is changed to "32 degrees". Also, FIG. 16C shows the example of the simulation result in the case where the field lens 12 is not set between the EPE 11 and the combiner 13. From FIG. 16C, in comparison with FIG. 16A, it is understood that the distortion of the virtual image is appropriately suppressed.

FIG. 16D shows the simulation result in the case where the tilt angle β of the EPE 11 is changed to substantially twice the changed tilt angle α (=16 degrees) of the combiner 13, i.e., in the case where the tilt angle β of the EPE 11 is changed to "32 degrees". Also, FIG. 16D shows the example of the simulation result in the case where the field lens 12 is set between the EPE 11 and the combiner 13. From FIG. 16D, in comparison with FIG. 16B, it is understood that the distortion of the virtual image is appropriately suppressed. In comparison with FIG. 16C, it is understood that the arch-shape distortion of the virtual image is appropriately eliminated.

FIGS. 17A to 17D show examples of the simulation result with both eyes. In FIGS. 17A to 17D, the virtual image obtained by the simulation is shown by the solid lines and the broken line, and the shape of the reference screen is shown by the dashed line. Specifically, the virtual image observed by the left eye is shown by the solid line, and the virtual image observed by the right eye is shown by the broken line.

FIG. 17A shows the simulation result in the case where the tilt angle β of the EPE 11 is not changed to substantially twice the changed tilt angle α (=16 degrees) of the combiner 13, i.e., in the case where the tilt angle β of the EPE 11 is maintained to be "24 degrees". Also, FIG. 17A shows the example of the simulation result in the case where the field lens 12 is not set between the EPE 11 and the combiner 13. From FIG. 17A, it is understood that distortion of the virtual image occurs. Specifically, in comparison with the result at the initial state before changing the tilt angle α of the combiner 13 as shown in FIG. 9C, it is understood that new distortion of the virtual image occurs and the difference in shape of the virtual images observed by both eyes is getting larger.

FIG. 17B shows the simulation result in the case where the tilt angle β of the EPE 11 is not changed to substantially twice the changed tilt angle α (=16 degrees) of the combiner 13, i.e., in the case where the tilt angle β of the EPE 11 is maintained to be "24 degrees". Also, FIG. 17B shows the example of the simulation result in the case where the field lens 12 is set between the EPE 11 and the combiner 13. From FIG. 17B, in comparison with FIG. 17A, it is understood that the arch-shape distortion of the virtual image is suppressed. However, in comparison with the result at the initial state before changing the tilt angle α of the combiner 13 as shown in FIG. 9C, it is understood that new distortion of the virtual image occurs and the difference in shape of the virtual images observed by both eyes is getting larger.

FIG. 17C shows the simulation result in the case where the tilt angle β of the EPE 11 is changed to substantially twice the changed tilt angle α (=16 degrees) of the combiner 13, i.e., in the case where the tilt angle β of the EPE 11 is changed to "32 degrees". Also, FIG. 17C shows the example of the simulation result in the case where the field lens 12 is not set between the EPE 11 and the combiner 13. From FIG. 17C, in comparison with FIG. 17A, it is understood that the distortion of the virtual image is appropriately suppressed and the difference in shape of the virtual images observed by both eyes is appropriately reduced.

FIG. 17D shows the simulation result in the case where the tilt angle β of the EPE 11 is changed to substantially twice the changed tilt angle α (=16 degrees) of the combiner 13, i.e., in the case where the tilt angle β of the EPE 11 is changed to "32 degrees". Also, FIG. 17D shows the example of the simulation result in the case where the field lens 12 is set between the EPE 11 and the combiner 13. From FIG. 17D, in comparison with FIG. 17B, it is understood that the distortion of the virtual image is appropriately suppressed and the difference in shape of the virtual images observed by both eyes is appropriately reduced. In comparison with FIG. 17C, it is understood that the arch-shape distortion of the virtual image is appropriately eliminated.

According to the third embodiment described above, by appropriately changing the tilt angle β of the EPE 11 (specifically, by changing the tilt angle β of the EPE 11 to be substantially twice the changed tilt angle α) when the tilt angle α of the combiner 13 is changed, it is possible to appropriately suppress the distortion of the virtual image caused by the change of the tilt angle α of the combiner 13.

For the reason described in the first embodiment, it is not necessary to change the tilt angle β of the EPE 11 to be strictly twice the changed tilt angle α. Namely, the tilt angle β of the EPE 11 may be changed to an angle close to twice the changed tilt angle α of the combiner 13.

The third embodiment may be exercised in combination with the second embodiment described above. Namely, when the tilt angle α of the combiner 13 is changed, it is possible to perform the control of changing the tilt angle β to substantially twice the changed tilt angle α and perform the processing of correcting the distortion of the image formed on the EPE 11 by the light emitted by the laser projector 1.

[Modified Examples]

Next, modified examples of the above embodiments will be described. The modified examples presented below may be appropriately exercised in combination with the first to third embodiments described above, and may be appropriately exercised in combination with each other.

(1st Modified Example)

While the embodiments described above show the display devices 100, 101 in which the user upwardly views the virtual image, the first modified example relates to a display device in which the user downwardly views the virtual image.

FIG. 18 is a block diagram schematically showing the entire configuration of the display device 102 according to the first modified example. The same constitutional elements as those of the display device 100 according to the first embodiment (see. FIGS. 1 and 3A) are indicated by the same reference numerals and the description thereof will be omitted.

As shown in FIG. 18, the display device 102 according to the first modified example is different from the display device 100 according to the first embodiment in that it is configured such that the user can downwardly observe the virtual image. Specifically, in the display device 100 according to the first embodiment, the EPE 11 and the combiner 13 are tilted by the tilt angles $\beta$, $\alpha$, in the counterclockwise direction with respect to the axes AXb, AXc, respectively. In the display device 102 according to the first modified example, the EPE 11 and the combiner 13 are tilted by the tilt angles $\beta$, $\alpha$, in the clockwise direction with respect to the axes AXb, AXc, respectively. In this configuration of the first modified example, similarly to the first embodiment, the tilt angle $\beta$ of the EPE 11 is set to substantially twice the tilt angle $\alpha$ of the combiner 13. (In the first modified example, the clockwise direction with respect to the axes AXb, AXc are defined as "positive".)

(2nd Modified Example)

The second modified example is different from the embodiments described above in that a mirror is provided between the EPE 11 and the combiner 13.

FIG. 19 is a block diagram schematically showing the entire configuration of the display device 103 according to the second modified example. The same constitutional elements as those of the display device 100 according to the first embodiment (see. FIGS. 1 and 3A) are indicated by the same reference numerals and the description thereof will be omitted.

As shown in FIG. 19, in the display device 103 according to the secondmodified example, a plane mirror 19 is providedbetween the EPE 11 and the combiner 13. Specifically, the plane mirror 19 is arranged between the field lens 12 and the combiner 13. The plane mirror 19 reflects the light from the field lens 12 to be incident on the combiner 13. For example, the light passed through the center of the EPE 11 is incident on the plane mirror 19 with the incident angle 45 degrees, and the plane mirror 19 reflects the light with the reflection angle 45 degrees to make the light incident on the center of the combiner 13. Such a plane mirror 19 is provided in view of shortening the total length of the display device 103, for example.

Here, the axis corresponding to the traveling direction of the light incident from the center C1 of the EPE 11 to the plane mirror 19 is defined as "AXa1", and the axis corresponding to the traveling direction of the light incident from the plane mirror 19 to the center C2 of the combiner 13 is defined as "AXa2". The axes AXa1 and AXa2 correspond to the axis obtained by folding the axis AXa (see. FIGS. 3A and 3B) connecting the center C1 of the EPE 11 and the center C2 of the combiner 13. In this case, the tilt angle of the EPE 11 with respect to the axis AXb1 is defined as the tilt angle $\beta$ of the EPE 11, wherein the axis AXb1 is perpendicular to the axis AXa1 and passing through the center C1 of the EPE 11. Similarly, the tilt angle of the combiner 13 with respect to the axis AXc1 is defined as the tilt angle $\alpha$ of the combiner 13, wherein the axis AXc1 is perpendicular to the axis AXa2 and passing through the center C2 of the combiner 13. As to the tilt angle $\beta$ of the EPE 11, the counterclockwise direction with respect to the axis AXb1 is defined as "positive". As to the tilt angle $\alpha$ of the combiner 13, the clockwise direction with respect to the axis AXc1 is defined as "positive".

When the tilt angles $\alpha$, $\beta$ are defined in this manner, the tilt angles $\alpha$, $\beta$ that can appropriately suppress the distortion of the virtual image is "$\beta=2\alpha$", similarly to the first embodiment. Therefore, also in the second modified example, the tilt angle $\beta$ of the EPE 11 is set to substantially twice the tilt angle $\alpha$ of the combiner 13.

While the configuration in which one mirror (the plane mirror 19) is provided between the EPE 11 and the combiner 13 is described above, two or more mirrors may be provided between the EPE 11 and the combiner 13. Also in this case, the tilt angle $\beta$ of the EPE 11 is set to substantially twice the tilt angle $\alpha$ of the combiner 13. (However, according to the manner of providing the mirror, the direction of tilting the EPE 11 and the combiner 13 is changed in the clockwise or counterclockwise direction.)

(3rd Modified Example)

The third modified example is different from the above described embodiments in that a liquid crystal display is used instead of the laser projector 1 and the EPE 11.

FIG. 20 is a block diagram schematically showing the entire configuration of the display device 104 according to the third modified example. The same constitutional elements as those in the display device 100 according to the first embodiment (see. FIGS. 1 and 3A) will be shown by the same reference numerals and their description will be omitted.

As shown in FIG. 20, the display device 104 according to the third embodiment is different from the display device 100 according to the first embodiment in that it has the liquid crystal display 200 instead of the laser projector 1 and the EPE 11. The liquid crystal display 200 corresponds to one example of the "image forming element" according to the present invention. Similarly to the first embodiment described above, the liquid crystal display 200 is arranged with the tilt angle $\beta$ substantially twice the tilt angle $\alpha$ of the combiner 13.

The present invention is not limited to the use of the liquid crystal display 200 instead of the laser projector 1 and the EPE 11. In another example, an organic EL display may be used instead of the laser projector 1 and the EPE 11. In this case, the organic EL display corresponds to one example of the "image forming element" according to the present invention.

(4th Modified Example)

In the fourth modified example, the configuration of the field lens 12 arranged on the exiting side of the EPE 11 is different from that of the embodiments described above. Specifically, the field lens according to the fourth modified example has a surface of convex shape to which the light from the EPE 11 enters (i.e., the incident surface), and a surface of convex shape opposite to the surface to which the light from the EPE 11 enters (i.e., the emitting surface). Namely, the field lens according to the fourth modified example has a biconvex spherical shape. Also, the field lens according to the fourth modified example is arranged such that the axis connecting its center and the center of the EPE 11 is parallel with the axis extending in the vertical direction of the EPE 11. The light emitted by the field lens enters the combiner 13. The field lens according to the fourth modified example corresponds to "a virtual image distortion correcting element" of the present invention.

FIGS. 21A and 21B show simulation results in case of using the field lens according to the fourth modified example. The simulation is performed using the following parameters.

- Interval between the EPE 11 and the incident surface of the field lens : 2mm (It is assumed that the centers of the EPE 11 and the field lens coincide with each other)
- Interval Y1 between the center C1 of the EPE 11 and the center C2 of the combiner 13: 170mm
- Interval Y2 between the center C2 of the combiner 13 and the eye point : 500mm
- Radius of curvature of the combiner 13: 400mm (The shape of the combiner 12 is spherical)
- Tilt $\alpha$ of the combiner 13: 12 degrees
- Tilt of the EPE 11: 24 degrees
- Size of intermediate image on the EPE 11:

$$\text{Horizontal length 75mm} \times \text{Vertical length 25mm}$$

- Radius of curvature of the field lens at the incident side: 800mm
- Radius of curvature of the field lens at the emitting side: 170mm
- Center thickness of the field lens : 8mm
- Refractive index of the field lens : 1.526

FIGS. 21A shows the simulation result at the eye point center in case of using the field lens according to the fourth modified example, and FIG. 21B shows the simulation result with both eyes in case of using the field lens according to the fourth embodiment. From FIGS. 21A and 21B, it is understood that the distortion of the virtual image (the arch-shape distortion, etc.) can be appropriately suppressed even when the field lens of the biconvex spherical shape.

(5th Modified Example)

While the present invention is applied to the laser projector 1 in the above-described embodiments, the present invention can be applied to various projectors other than the laser projector 1, such as a liquid crystal projector.

(6th Modified Example)

The above-described embodiments are directed to the examples in which the present invention is applied to the field lens 12 and the combiner 13 formed in the spherical shape. However, the present invention may be applied to the field lens and/or the combiner formed in an aspherical shape. In addition, while the above-described embodiments are directed to the examples in which the present invention is applied to the EPE 11 formed in a plane shape, the present invention is not limited to form the EPE in the plane shape.

As described above, the embodiments are not limited to those described above, and may be appropriately altered without departing from the gist and idea of the invention readable from the claims and entire specification.

INDUSTRIAL APPLICABILITY

This invention can be used for a display device such as a head-up display, which makes a user view the image as a virtual image.

DESCRIPTION OF REFERENCE NUMERALS

| | |
|---|---|
| 1 | Laser projector |
| 11 | Exit-Pupil Expander (EPE) |
| 12 | Field lens |
| 13 | Combiner |
| 15 | Angle sensor |
| 16 | Actuator |
| 19 | Plane mirror |
| 100 | Display device |

## Claims

**1.** A display device comprising:

an image forming element which forms an image to be displayed; and
an optical element which reflects a light emitted by the image forming element to display a virtual image,
wherein a first angle of the image forming element with respect to a traveling direction of the light traveling from a center of the image forming element to a center of the optical element is set in accordance with a second angle of the optical element with respect to the traveling direction of the light such that distortion of the virtual image displayedby the optical element becomes small.

**2.** The display device according to claim 1, further comprising an angle changing means which changes an angle of the image forming element with respect to the traveling direction of the light so as to reduce the distortion of the virtual image caused by a change of the angle of the optical element with respect to the traveling direction of the light.

**3.** The display device according to claim 2, further comprising a means which changes the angle of the optical element.

**4.** The display device according to any one of claims 1 to 3, wherein the first angle is set to be larger than the second angle.

**5.** The display device according to any one of claims 1 to 4, wherein the first angle is set to be substantially twice the second angle.

**6.** The display device according to any one of claims 1 to 5,
wherein the optical element has a concave shape in the traveling direction of the light emittedby the image forming element, and
wherein the image forming element has a plane shape.

**7.** The display device according to claim 2, wherein the angle changing means changes the angle of the image forming element with respect to the traveling direction of the light so as to reduce trapezoidal distortion of the virtual image and/or a difference between aspect ratios of the image formed on the image forming element and the virtual image.

**8.** The display device according to claim 2, wherein the angle changing means changes the angle of the image forming element with respect to the traveling direction of the light, while maintaining a relative angle relation between the image forming element and the optical element to be in a predetermined condition.

**9.** The display device according to claim 2, wherein the angle changing means changes the angle of the image forming element with respect to the traveling direction of the light to be substantially twice the angle of the optical element with respect to the traveling direction of the light.

**10.** The display device according to any one of claims 1 to 9, further comprising a virtual image distortion correcting element arranged between the image forming element and the optical element.

**11.** The display device according to claim 10, wherein the virtual image distortion correcting element corrects arch-shape distortion of the virtual image caused by a curvature of the optical element.

**12.** The display device according to any one of claims 1 to 11, wherein the image forming element is an exit-pupil expanding element which expands an exit-pupil of the light irradiated from a light source.

**13.** The display device according to claim 12, further comprising a correcting means which corrects distortion of the image formed on the image forming element by the light irradiated from the light source.

**14.** The display device according to claim 13, wherein the correcting means corrects the distortion of the image caused by an angle of the light irradiated from the light source with respect to the image forming element.

**15.** The display device according to any one of claims 1 to 11, wherein the image forming element is a liquid crystal display.

**16.** The display device according to any one of claims 1 to 11, wherein the image forming element is an organic EL display.

**17.** The display device according to any one of claims 1 to 16,
wherein the first angle is an angle that the image forming element forms with respect to an axis which is perpendicular to the traveling direction of the light traveling from the center of the image forming element to the center of the optical element and which passes through the center of the image forming element, and
wherein the second angle is an angle that the optical element forms with respect to an axis which is perpendicular to the traveling direction of the light traveling from the center of the image forming element to the center of the optical element and whichpasses through the center of the optical element.

**18.** A display device comprising:

an image forming element which forms an image to be displayed;
an optical element which reflects a light emitted by the image forming element to display a virtual image;
a first angle changing means which changes an angle of the optical element with respect to a traveling direction of a light traveling from a center of the image forming element to a center of the optical element; and
a second angle changing means which changes an angle of the image forming element with respect to the traveling direction of the light so as to reduce distortion of the virtual image caused by a change of an angle of the optical element with respect to the traveling direction of the light.

FIG. 1

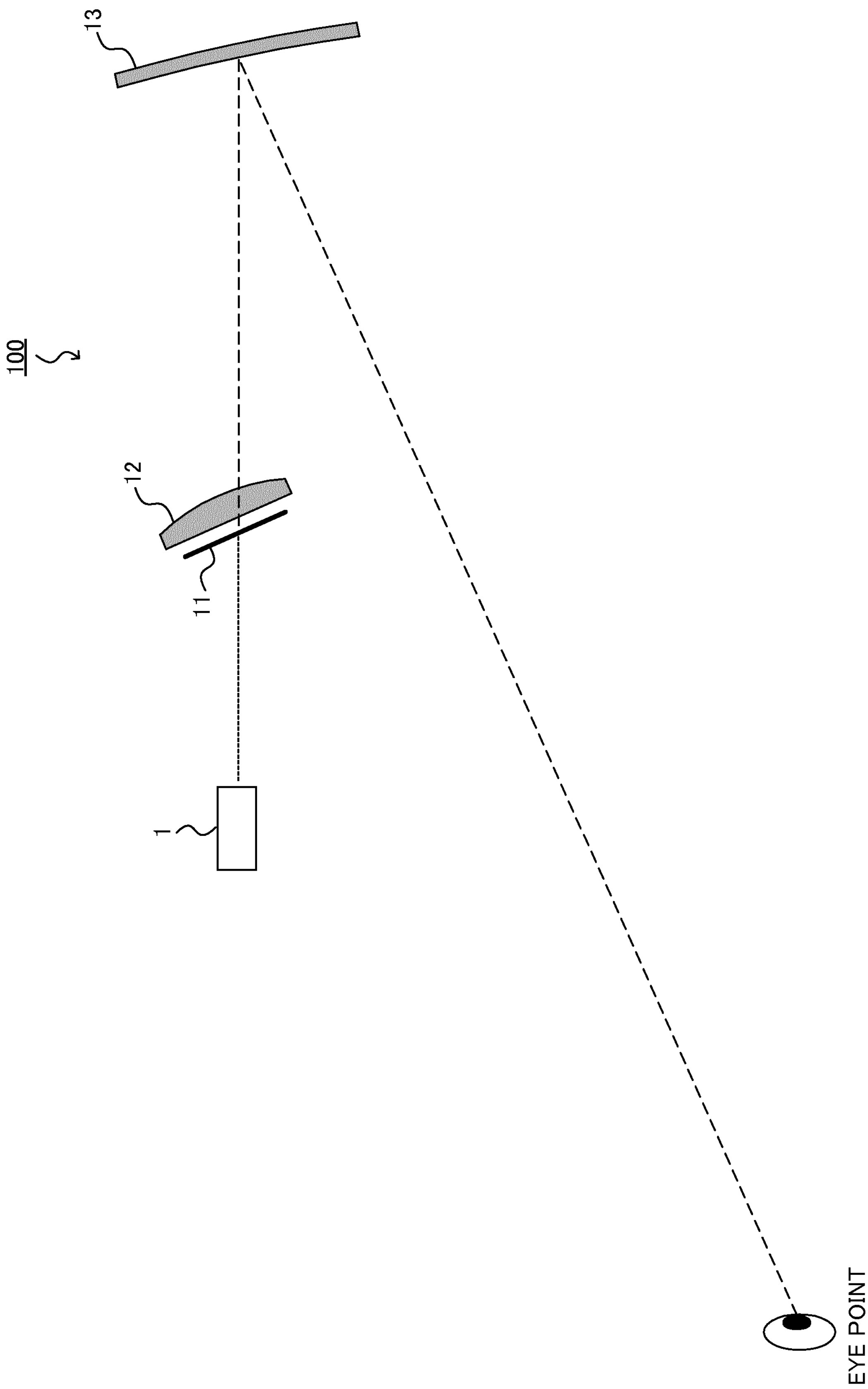

FIG. 2

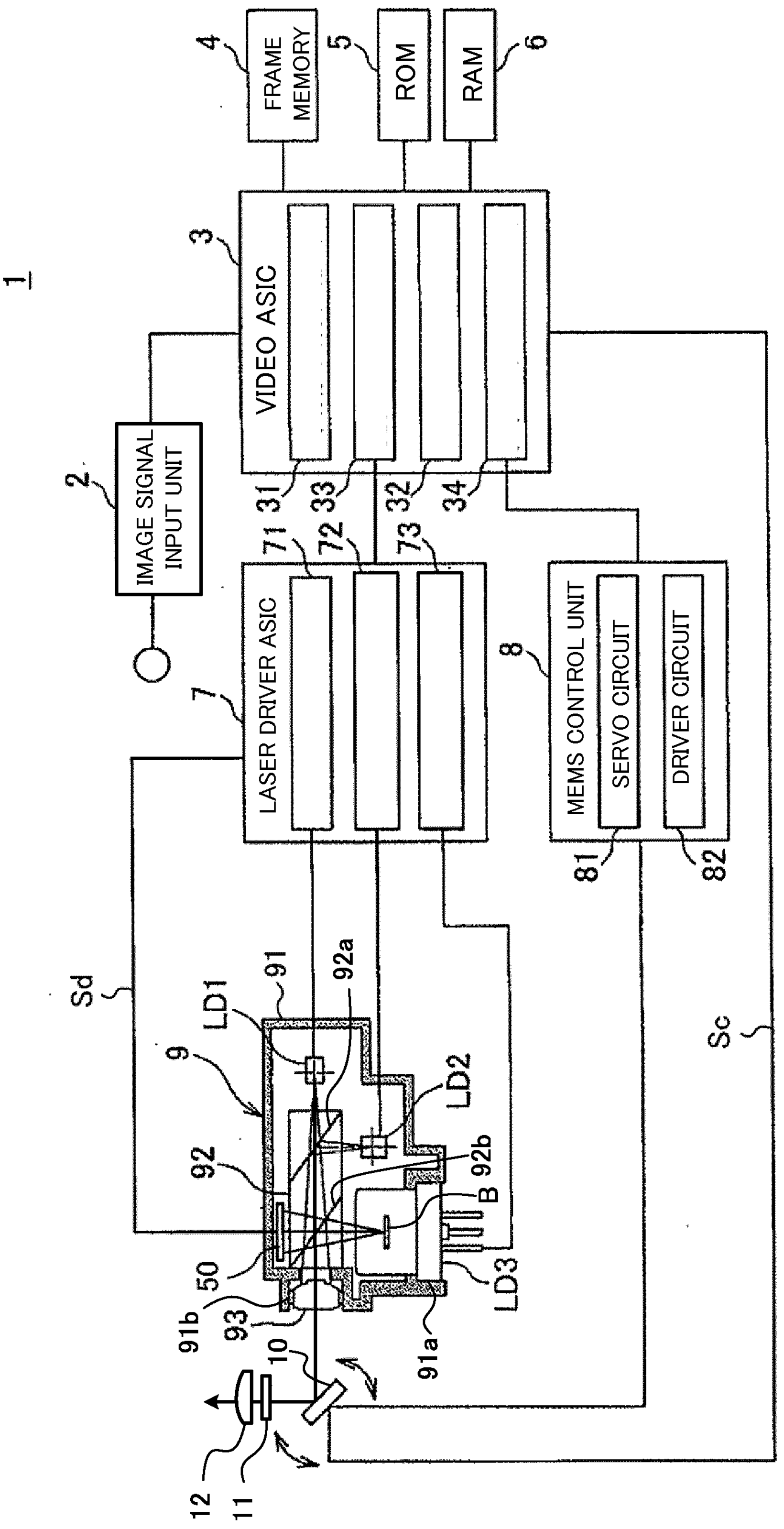


31: SYNC/IMAGE SEPARATING UNIT
32: BIT DATA CONVERTING UNIT
33: LIGHT EMISSION PATTERN CONVERTING UNIT
34: TIMING CONTROLLER
71: RED LASER DRIVING CIRCUIT
72: BLUE LASER DRIVING CIRCUIT
73: GREEN LASER DRIVING CIRCUIT

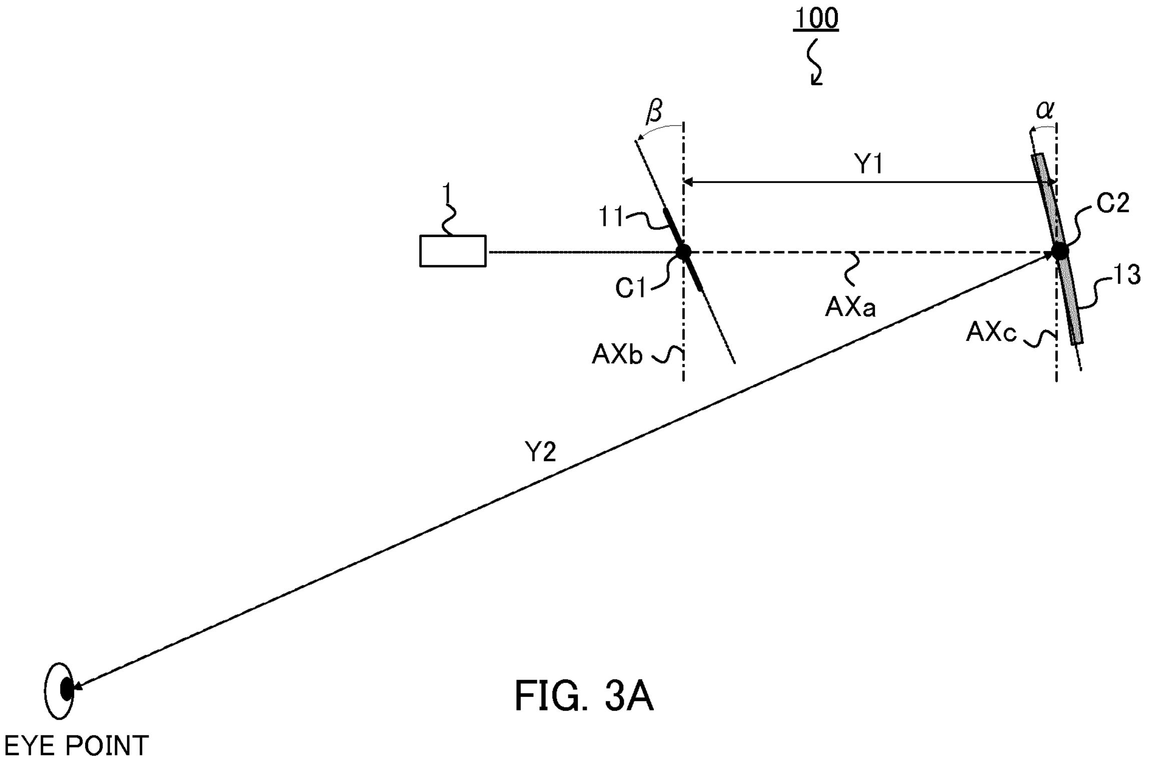
100
β
α
Y1
1
11
C2
C1
AXa
13
AXc
AXb
Y2
EYE POINT

FIG. 3A

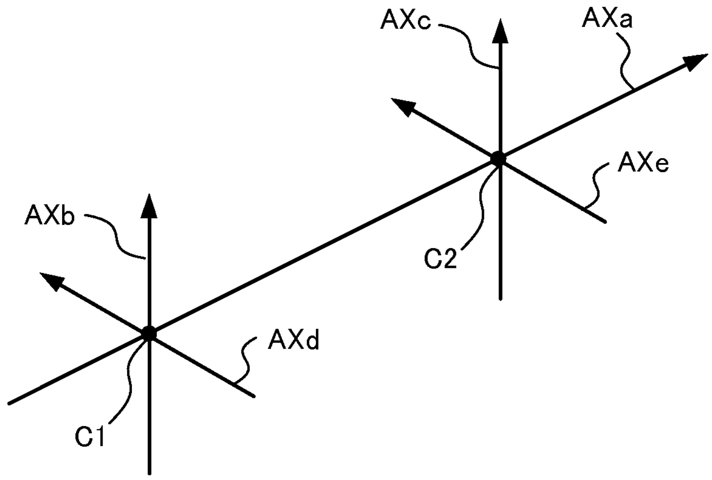
AXc
AXa
AXe
AXb
C2
AXd
C1

FIG. 3B

FIG. 4

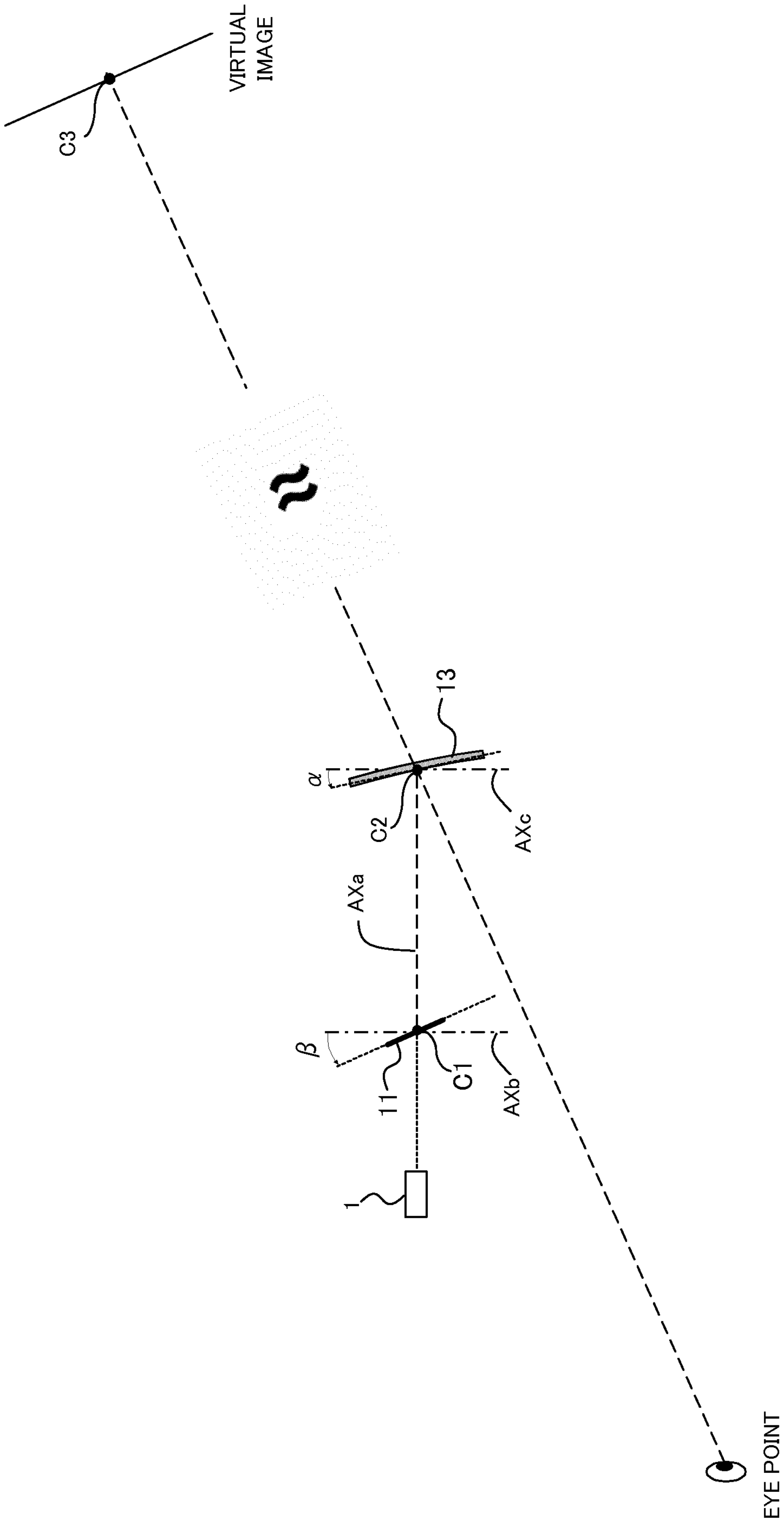

FIG. 5

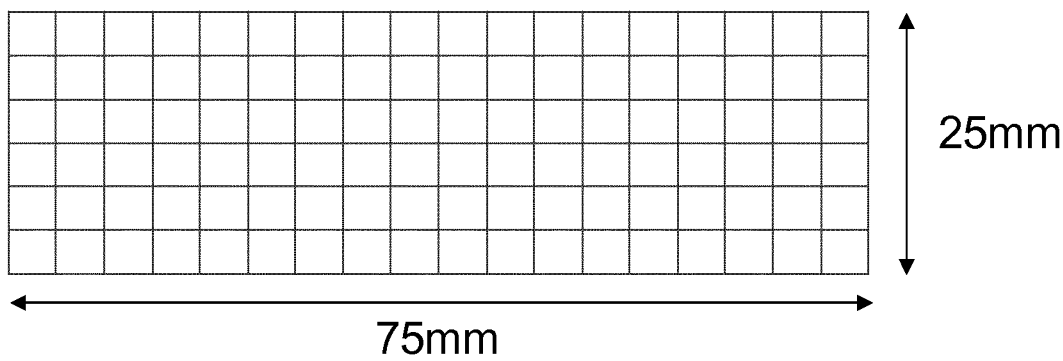

FIG. 6

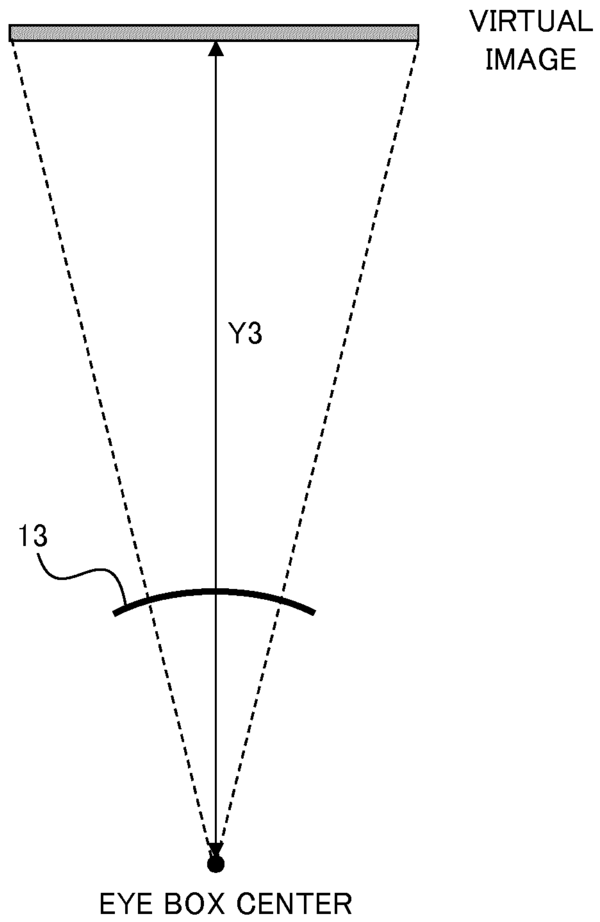

FIG. 7A

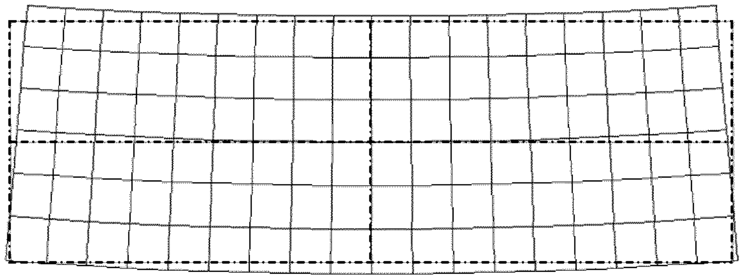

FIG. 7B

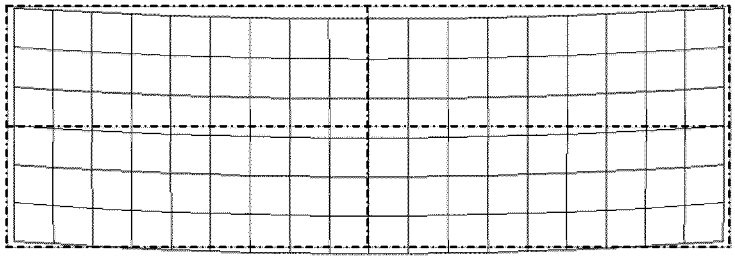

FIG. 7C

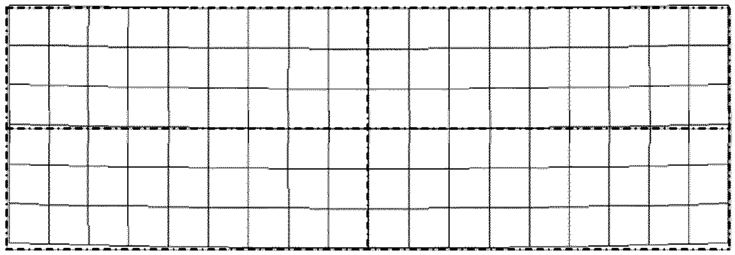

FIG. 8

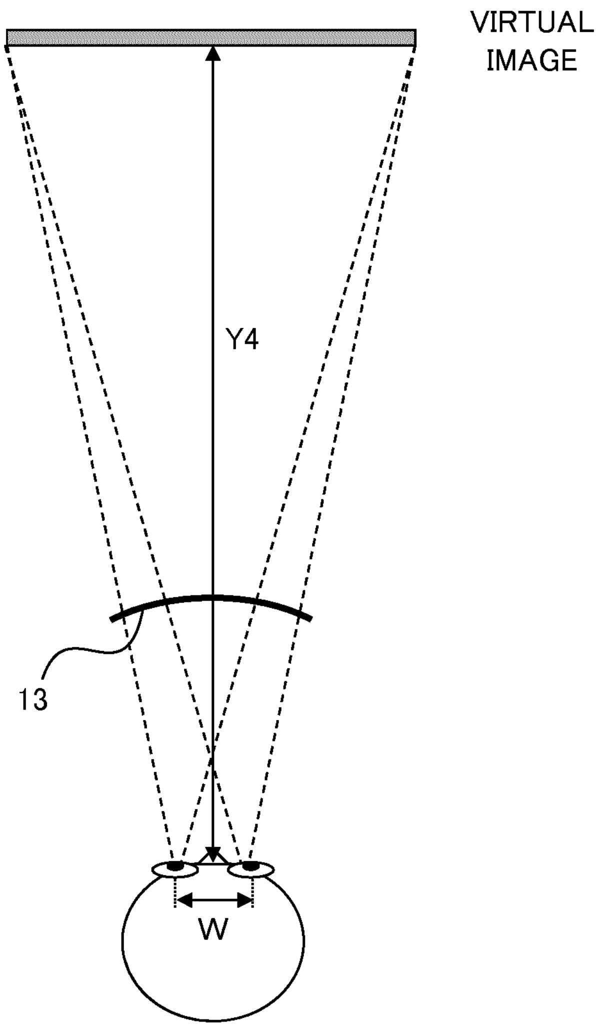

FIG. 9A

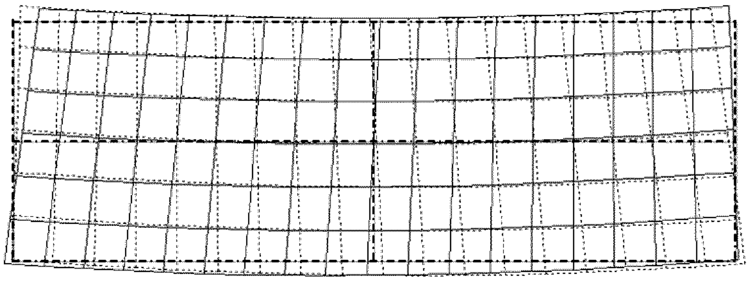

FIG. 9B

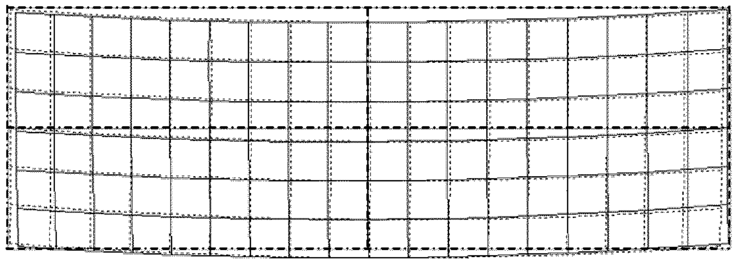

FIG. 9C

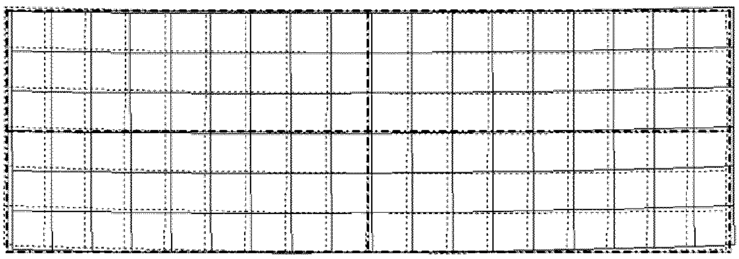

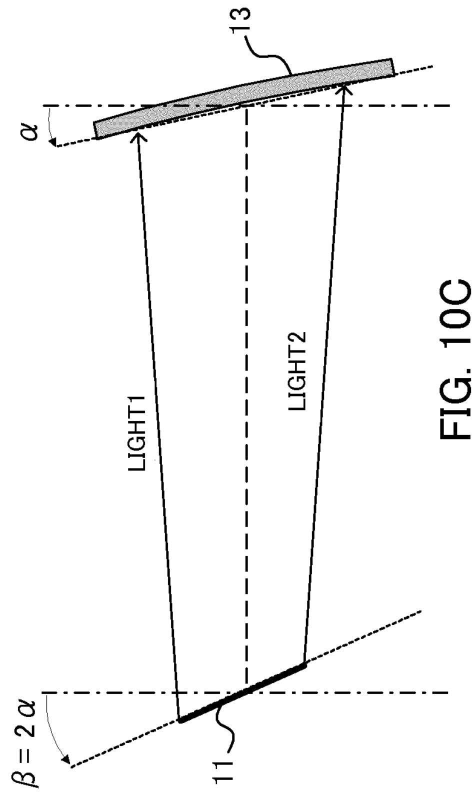


FIG. 10C

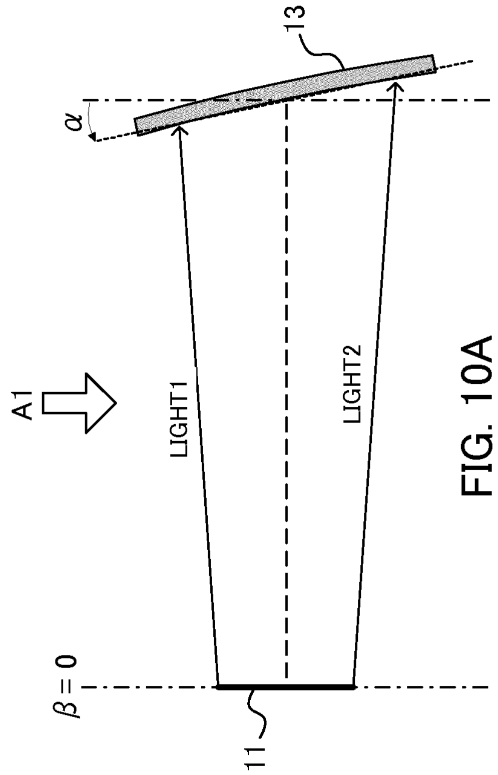


FIG. 10A

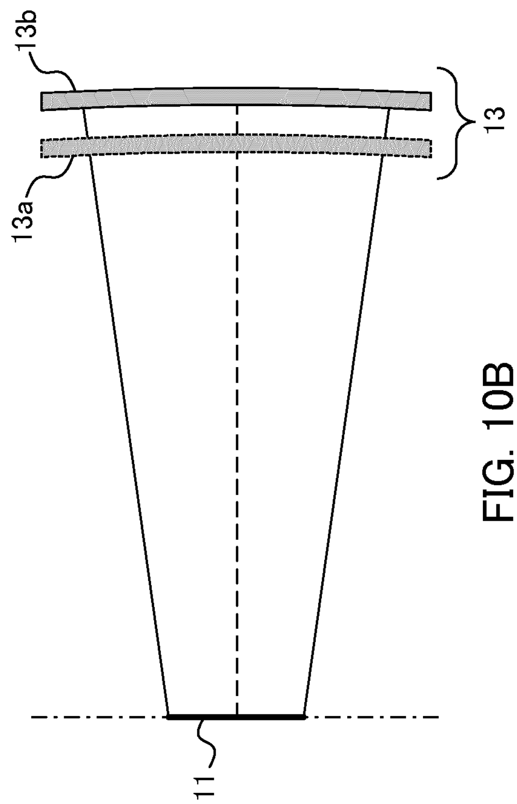


FIG. 10B

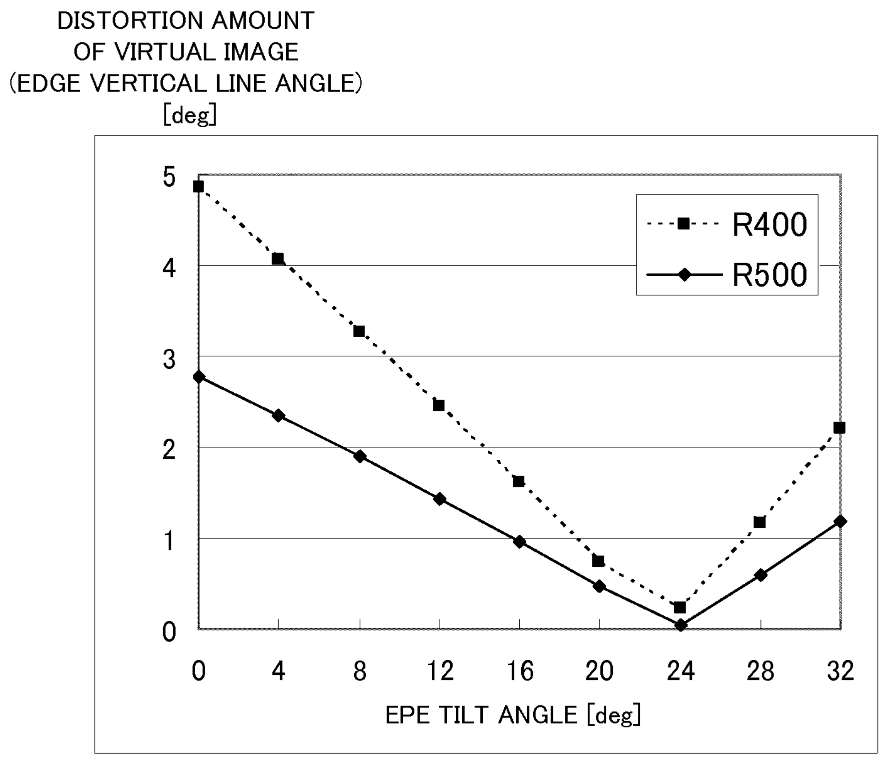


FIG. 11A

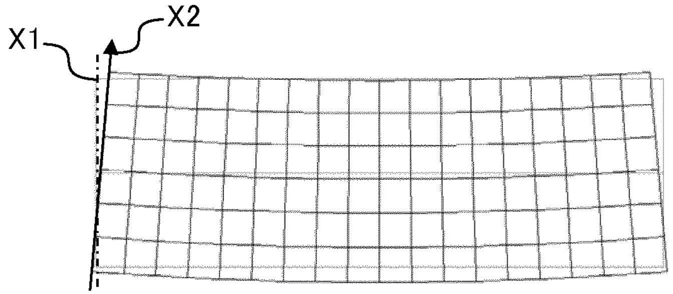


FIG. 11B

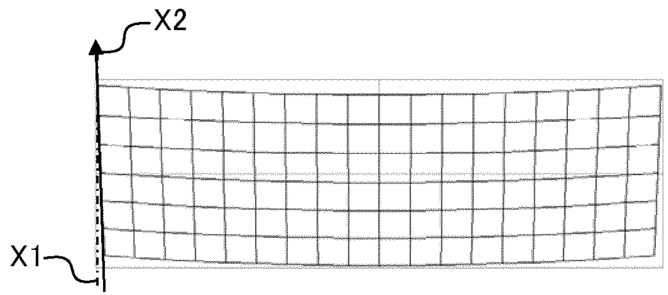


FIG. 11C

FIG. 12A

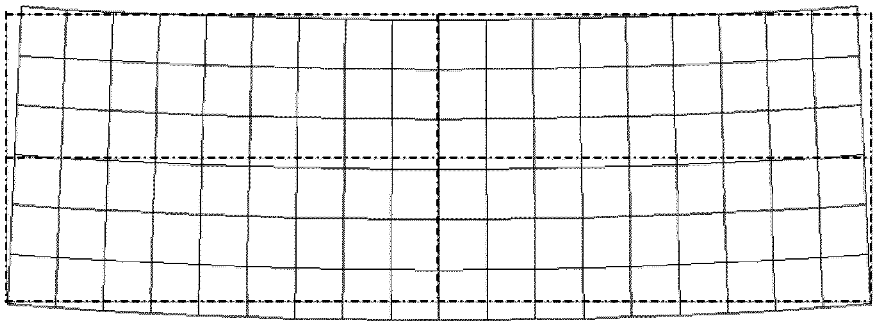

FIG. 12B

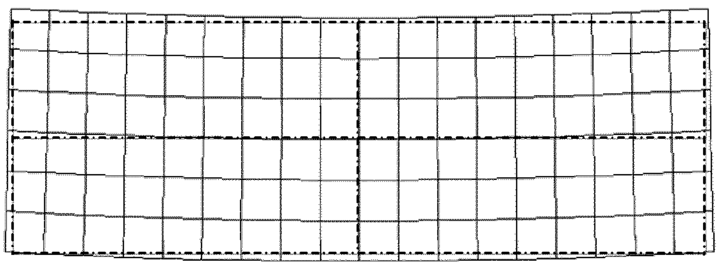

FIG. 13A

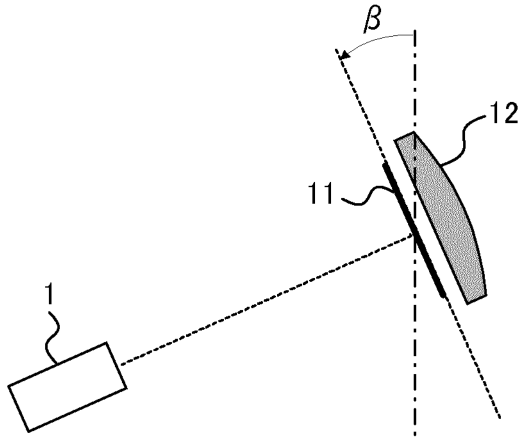


FIG. 13B

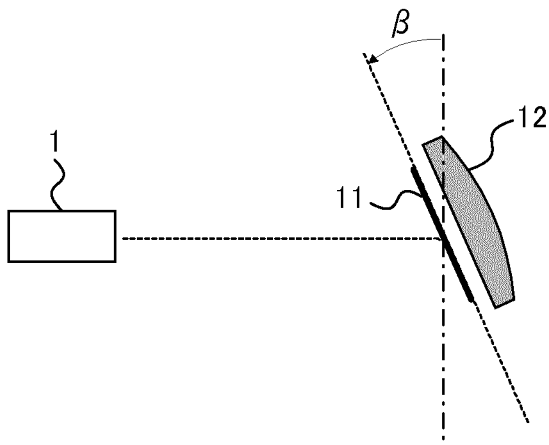

FIG. 14A

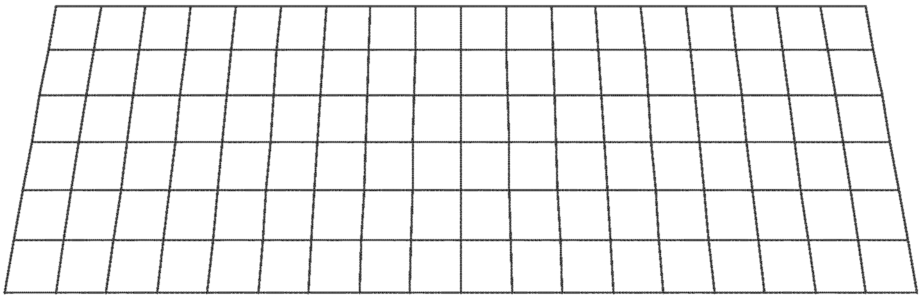

FIG. 14B

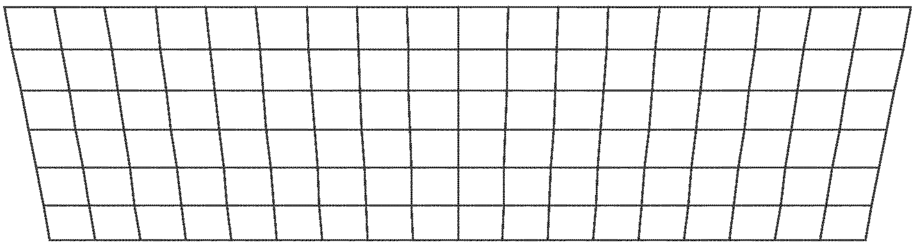

FIG. 15

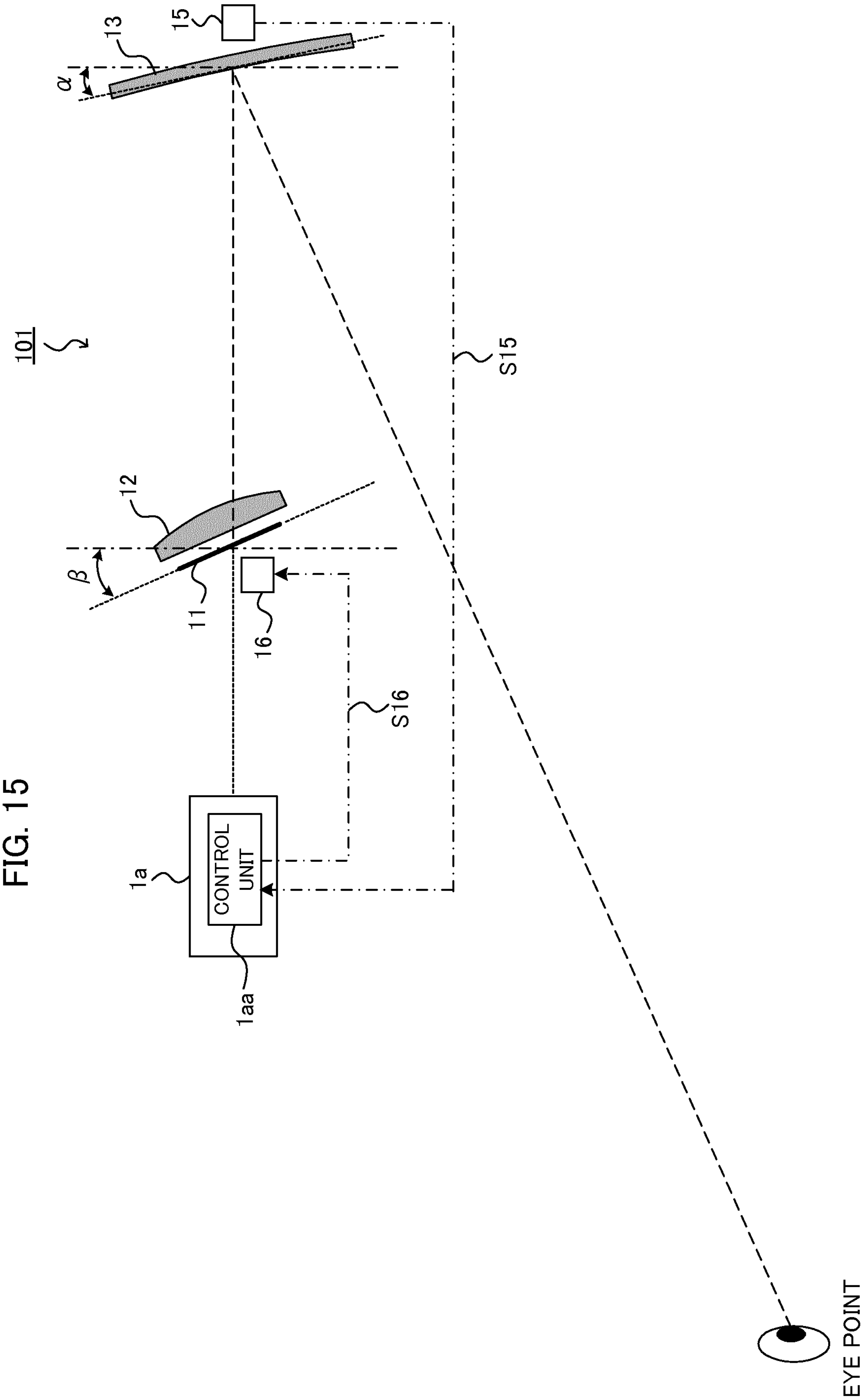

FIG. 16A

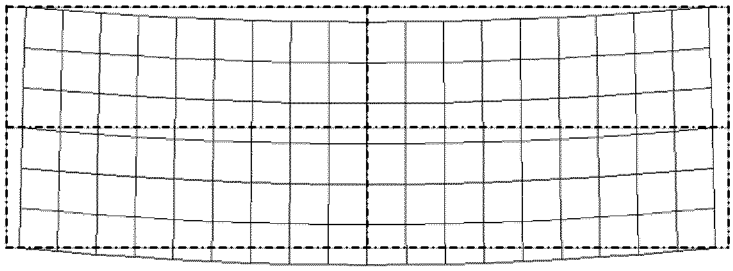

FIG. 16B

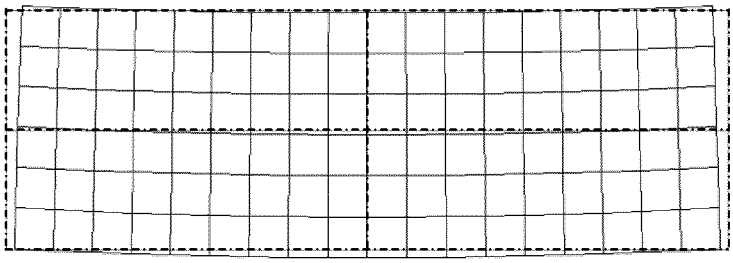

FIG. 16C

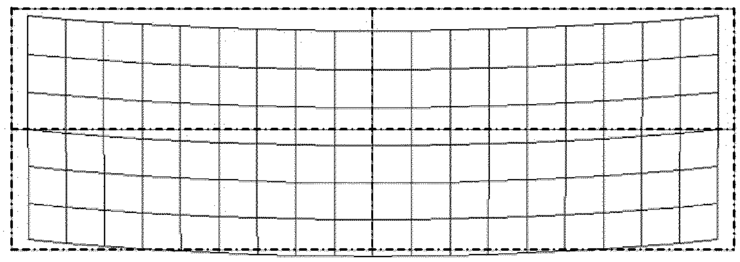

FIG. 16D

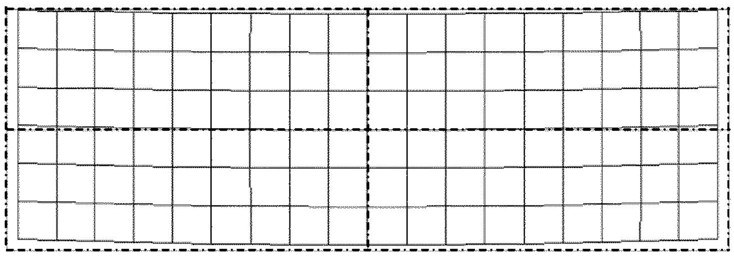

FIG. 17A

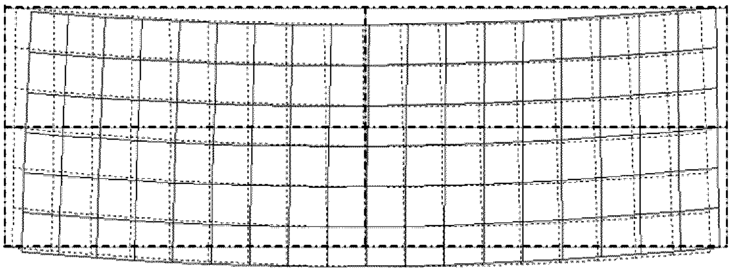

FIG. 17B

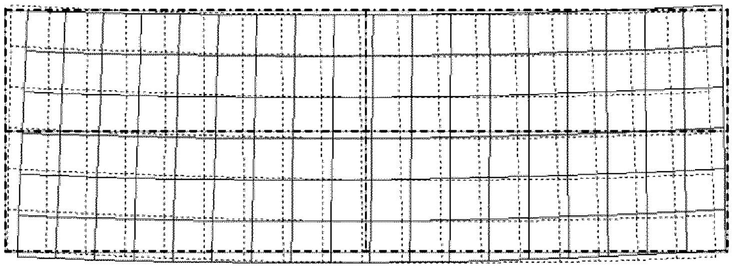

FIG. 17C

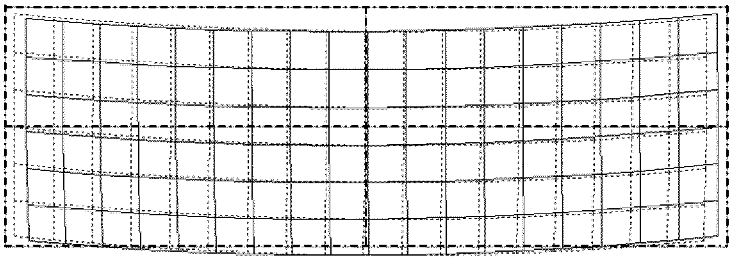

FIG. 17D

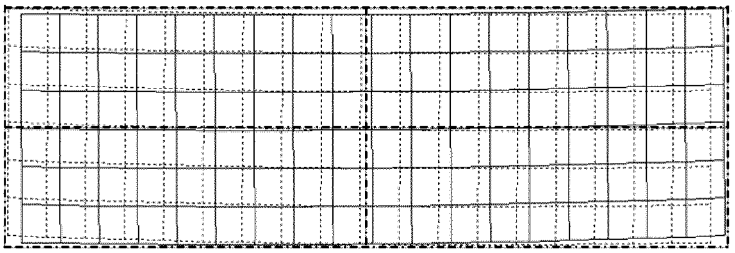

FIG. 18

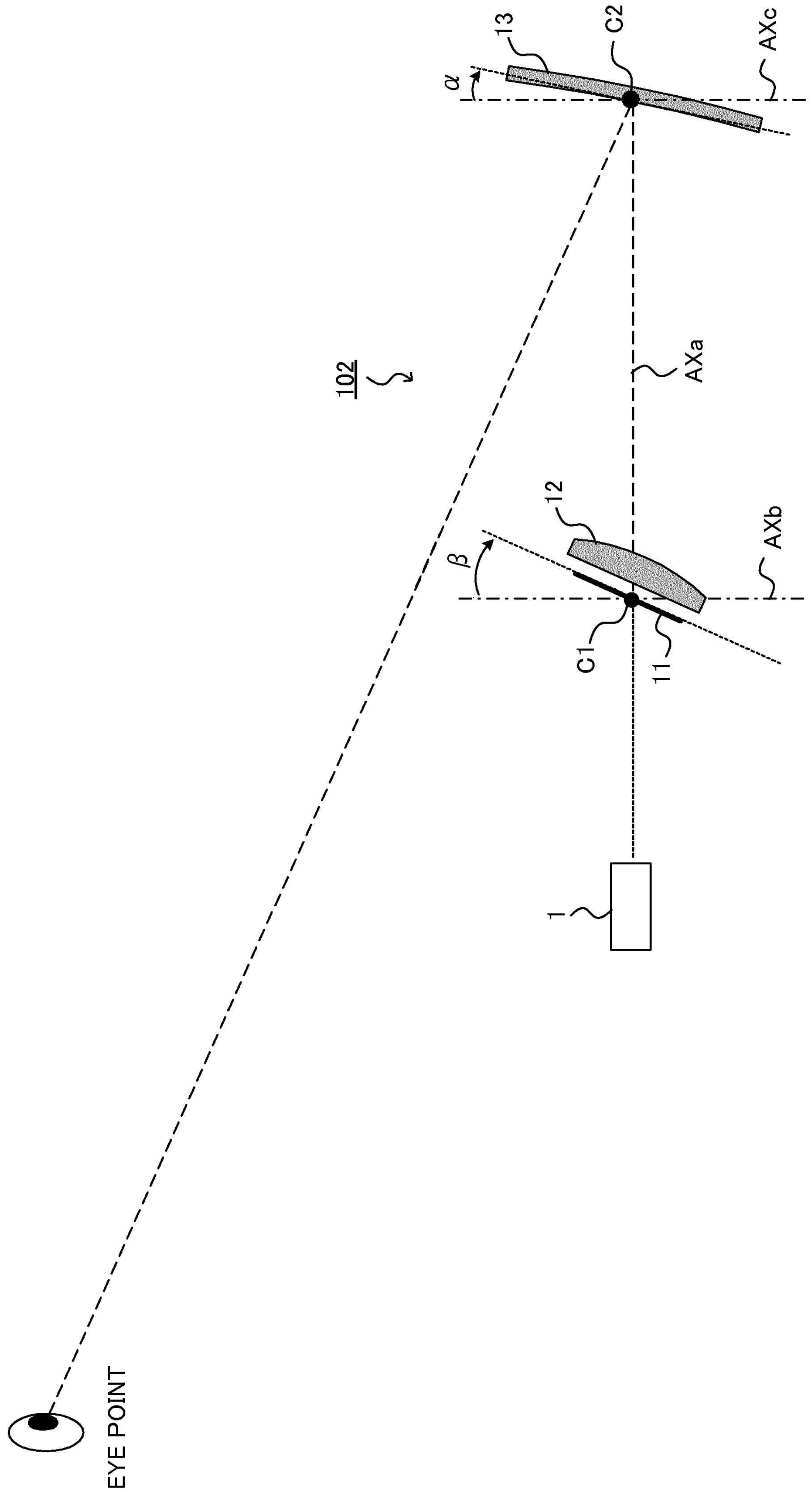

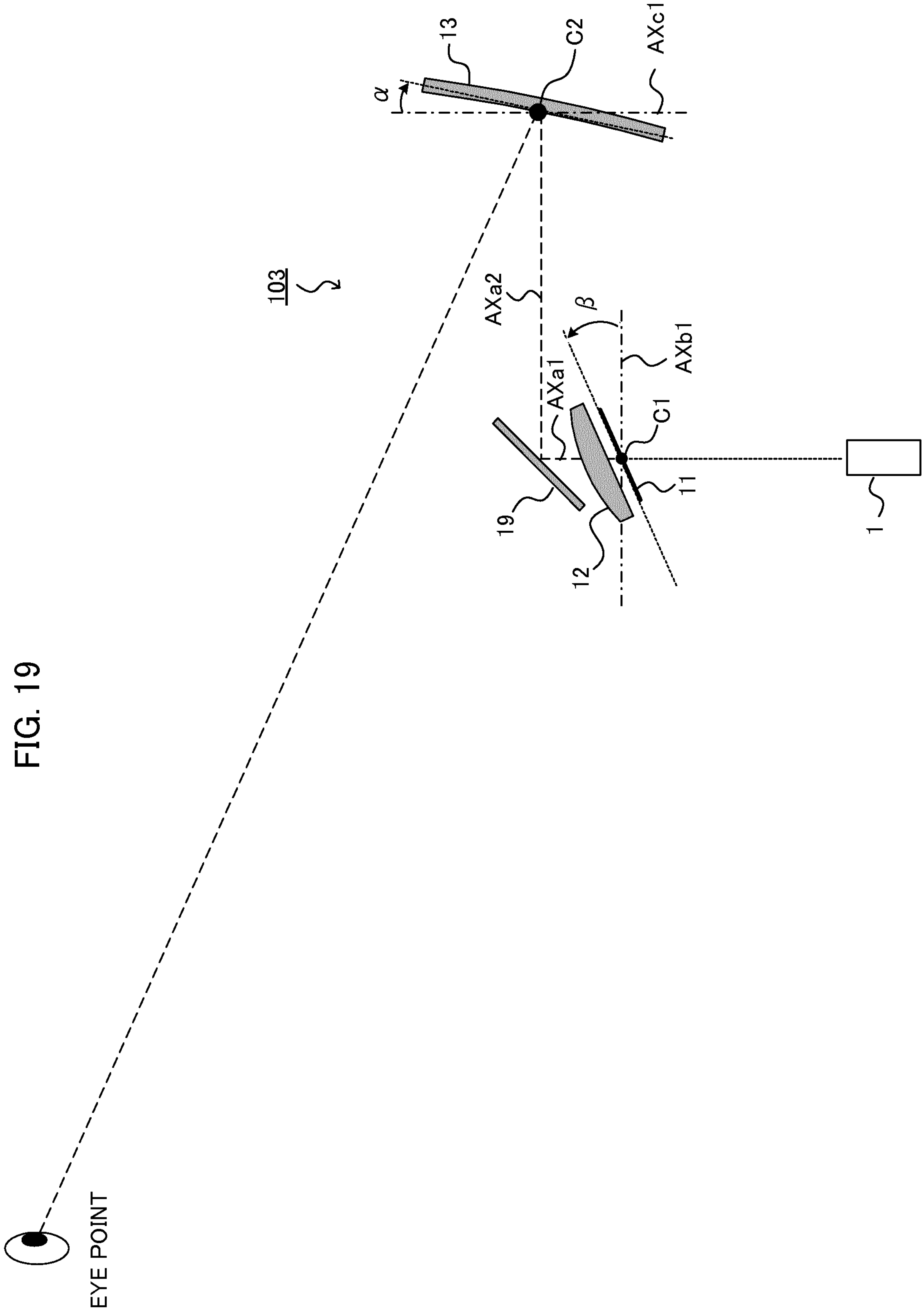


FIG. 19

FIG. 20

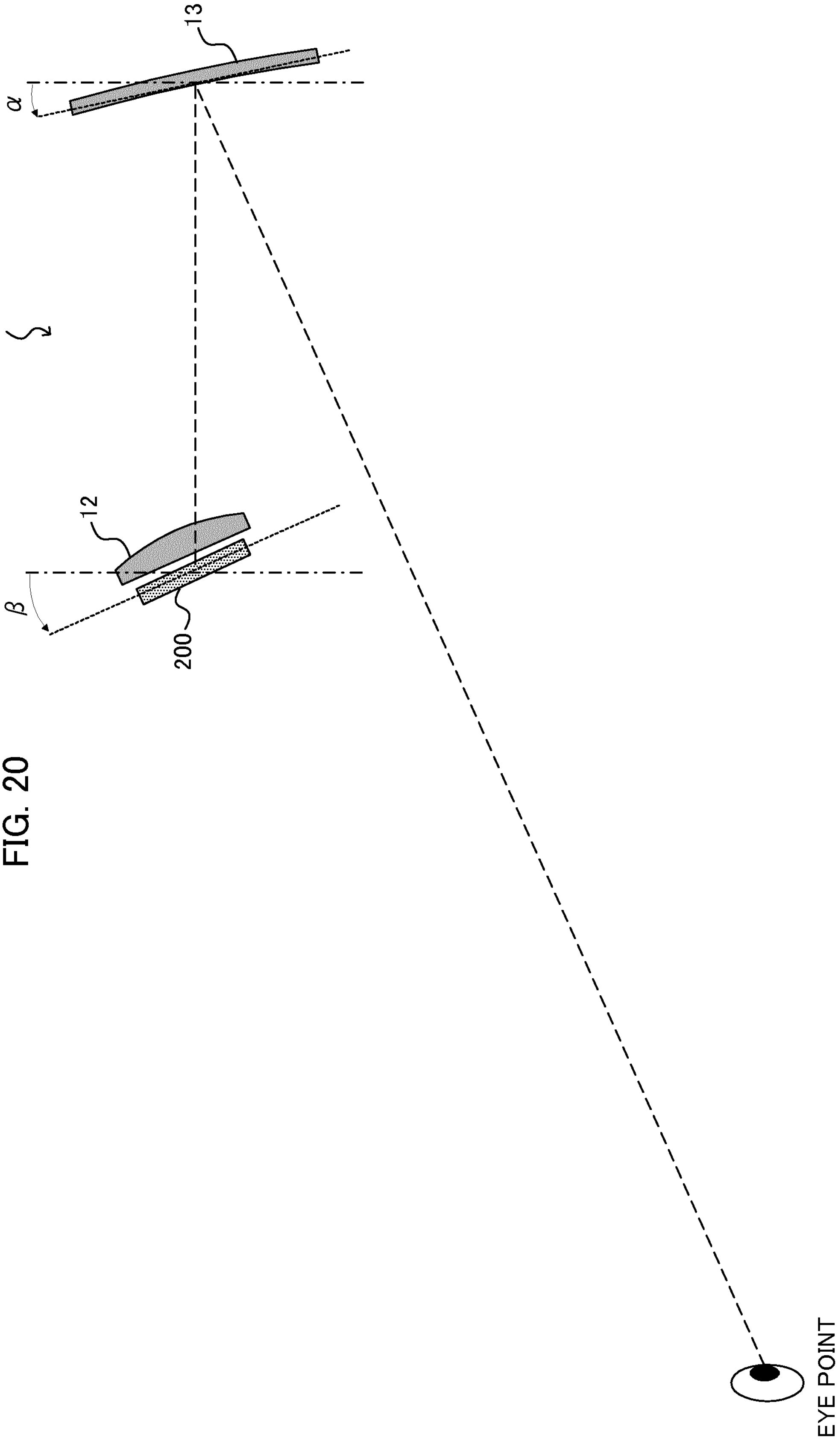

FIG. 21A

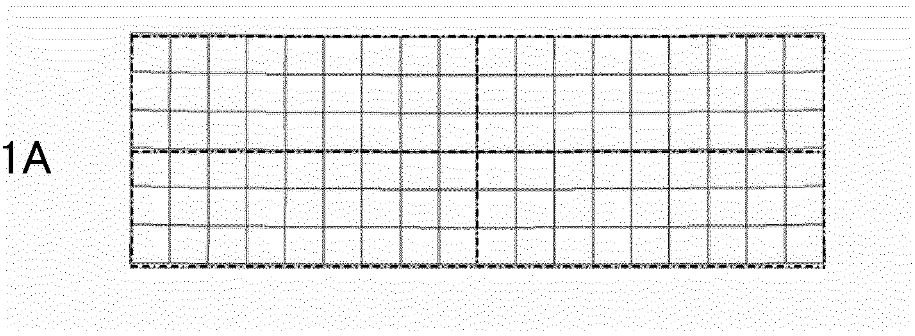

FIG. 21B

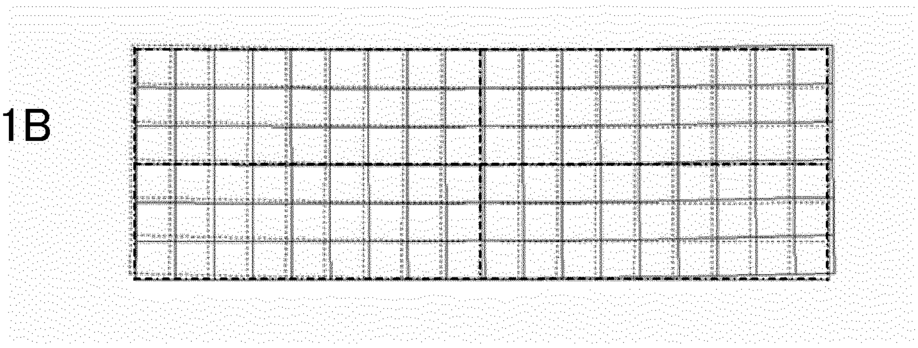

**INTERNATIONAL SEARCH REPORT**

International application No.
PCT/JP2011/065187

A. CLASSIFICATION OF SUBJECT MATTER
*G02B27/01*(2006.01)i

According to International Patent Classification (IPC) or to both national classification and IPC

B. FIELDS SEARCHED

Minimum documentation searched (classification system followed by classification symbols)
G02B27/01

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 11-337862 A (Mitsubishi Electric Corp.), 10 December 1999 (10.12.1999), entire text; all drawings (Family: none) | 1-7,9,12,15, 17,18<br>8,10,11,13, 14,16 |
| Y | JP 10-48562 A (Asahi Glass Co., Ltd.), 20 February 1998 (20.02.1998), claim 5 (Family: none) | 8 |
| Y | JP 2000-347127 A (Nippon Soken, Inc., Denso Corp.), 15 December 2000 (15.12.2000), entire text; all drawings (Family: none) | 10,11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 September, 2011 (22.09.11) | 04 October, 2011 (04.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/065187

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-217372 A (Funai Electric Co., Ltd.), 30 September 2010 (30.09.2010), entire text; all drawings & US 2010/0231870 A & US 2010/0231870 A1 | 13,14 |
| A | JP 11-249061 A (Asahi Glass Co., Ltd.), 17 September 1999 (17.09.1999), paragraph [0083] (Family: none) | 16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0829723 B
- JP 2010164944 A
- JP 3912234 B
- JP 3855461 B
- JP H06270716 B